# EUROPEAN PATENT APPLICATION

(11) **EP 4 383 371 A1**
(43) Date of publication of application: **12.06.2024**
(21) Application number: 22853177.8
(22) Date of filing: 05.08.2022
(51) Int. Cl.: H01M 4/525, H01M 10/052, H01M 10/0567, H01M 10/0568, H01M 10/0569

(54) **NON-AQUEOUS ELECTROLYTE, AND NON-AQUEOUS ELECTROLYTE BATTERY USING SAID NON-AQUEOUS ELECTROLYTE**

(30) Priority: 06.08.2021 JP 2021130302; 06.08.2021 JP 2021130303; 06.08.2021 JP 2021130305
(71) Applicant: MU Ionic Solutions Corporation, Tokyo 100-8251 (JP)
(72) Inventor: NISHIO, Koichi, Tokyo 100-8251 (JP); NOZAWA, Ryo, Shizuoka-shi, Shizuoka 420-0082 (JP); KAWAKAMI, Daisuke, Tokyo 100-8251 (JP)
(74) Representative: Vossius & Partner Patentanwälte Rechtsanwälte mbB
(86) International application number: PCT/JP2022/030053
(87) International publication number: WO 2023/013759

(57) **Abstract**

The present invention relates to: [1] a nonaqueous electrolytic solution comprising a compound (A) represented by formula (I); and [2] a nonaqueous electrolytic solution battery comprising a positive electrode, a negative electrode, and the nonaqueous electrolytic solution.

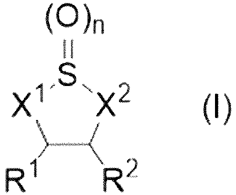

## Description

### Technical Field

The present invention relates to a nonaqueous electrolytic solution and a nonaqueous electrolytic solution battery using the nonaqueous electrolytic solution.

### Background Art

Energy devices represented by nonaqueous electrolytic solution batteries, such as lithium ion secondary batteries are being put into practical use in a wide range of applications from so-called consumer power sources, such as mobile phones and laptop computers to vehicle-mounted power sources for driving automobiles and the like. However, in recent years, demands for higher performance of nonaqueous electrolytic solution batteries have been increasing, and in particular, demands for higher capacities and improvements in various battery characteristics, such as low-temperature use properties, high-temperature storage properties, cycle properties, and safety during overcharge have been increasing.

As techniques for improving the high-temperature storage properties and the cycle properties of nonaqueous electrolytic solution secondary batteries, many techniques have been studied on active materials of positive electrodes and negative electrodes and various components of batteries comprising nonaqueous electrolytic solution.

PTL 1 discloses a nonaqueous electrolytic solution for a lithium ion secondary battery comprising a specific vinylene carbonate compound and a specific vinylethylene sulfite in order to provide a lithium ion secondary battery that suppresses gas generation during continuous charging and has excellent discharging properties after continuous charging.

PTL 2 discloses a nonaqueous electrolyte secondary battery comprising, as a nonaqueous electrolyte, 2% by mass or less of a specific cyclic unsaturated sultone compound and 2% by mass or less of a specific cyclic sulfite in order to provide a nonaqueous electrolyte secondary battery in which an increase in internal resistance of the battery after high-temperature storage is suppressed and an increase in internal resistance of the battery when the battery after high-temperature storage is used at a low temperature is suppressed.

### Citation List

### Patent Literature

PTL 1: JP 2005-166553 A
PTL 2: JP 2010-92698 A

### Summary of Invention

### Technical Problem

The present inventors have found that the batteries of PTLs 1 and 2 have the following problems: as Problem 1, a cyclic sulfite having a carbon-carbon double bond is effective in suppressing a side reaction at a negative electrode, but the effect of forming a surface film at a positive electrode is poor, and the effect of suppressing a side reaction at the positive electrode is insufficient, so that the suppression of gas generation and an increase in internal resistance in the batteries is insufficient; as Problem 2, a negative electrode surface film formed on the negative electrode is fragile, a side reaction of a nonaqueous electrolytic solution on the negative electrode occur, and the improvement of a recovery capacity retention rate is insufficient; as Problem 3, there is still room for improvement in cycle properties; and as Problem 4, a negative electrode surface film formed on the negative electrode is fragile, and when a linear carboxylate having high reduction reactivity in the negative electrode is applied to the nonaqueous electrolytic solution, a side reaction of the linear carboxylate on the negative electrode at the initial stage of charging and discharging cannot be suppressed, and the effect of suppressing an increase in internal resistance is insufficient.

The present invention has been made in order to solve the above-mentioned problems, and relates to: 1) a nonaqueous electrolytic solution which can improve a direct current resistance (DCR) retention rate after high-temperature storage and suppress an increase in a gas generation amount after high-temperature storage by being used in a nonaqueous electrolytic solution battery; 2) a nonaqueous electrolytic solution which can improve a recovery capacity retention rate by being used in a nonaqueous electrolytic solution battery; 3) a nonaqueous electrolytic solution which can improve a capacity retention rate after cycle charging and discharging and suppress electrode swelling and resistance after cycles by being used in a nonaqueous electrolytic solution battery; and 4) a nonaqueous electrolytic solution which can suppress an increase in internal resistance by being used in a nonaqueous electrolytic solution battery in spite of comprising a carboxylate having high reduction reactivity at a negative electrode as a nonaqueous solvent; and a nonaqueous electrolytic solution battery using the nonaqueous electrolytic solution.

### Solution to Problem

As a result of intensive studies in view of the above circumstances, the present inventors have found that the above Problem 1 can be solved by using a nonaqueous electrolytic solution for a nonaqueous electrolytic solution battery having a positive electrode in which the positive electrode active material comprises a specific lithium transition metal-based compound, and in which the nonaqueous electrolytic solution comprises a specific cyclic sulfur-containing compound; that the above Problem 2 can be solved by using a nonaqueous electrolytic solution comprising a specific cyclic sulfur-containing compound and at least one type of anion-containing compound selected from the group consisting of a phosphate anion-containing compound having a P-F bond and a P=O bond, an anion-containing compound having a S=O bond, and an oxalate complex anion-containing compound in a specific amount; that the above Problem 3 can be solved by using a nonaqueous electrolytic solution for a nonaqueous electrolytic solution battery having a negative electrode in which the negative electrode active material comprises a material comprising a metal element and/or a metalloid element capable of being alloyed with Li, and in which the nonaqueous electrolytic solution comprises a specific cyclic sulfur-containing compound; and that the above Problem 4 can be solved by using a nonaqueous electrolytic solution comprising a specific cyclic sulfur-containing compound, in addition to a linear carboxylate and one or more selected from the group consisting of a cyclic carbonate having a carbon-carbon unsaturated bond and a cyclic carbonate having a fluorine atom, and have thus completed the present invention.

That is, the gist of the present invention is as follows.
[1] A nonaqueous electrolytic solution comprising a compound (A) represented by formula (I): 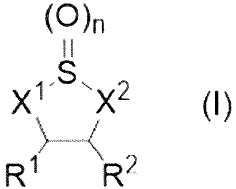 wherein X¹ and X² are each independently an oxygen atom or CH₂, R¹ and R² are each independently a hydrogen atom, a halogen atom, or a hydrocarbon group, and n is 1 or 2, provided that either one of R¹ and R² is a hydrocarbon group containing at least one carbon-carbon unsaturated bond, and when n is 2, at least one of X¹ and X² is CH₂.
[2] The nonaqueous electrolytic solution according to [1], wherein the compound (A) is a compound represented by the following formula (II): 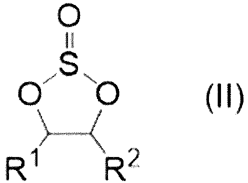 wherein R¹ and R² are the same as R¹ and R² in the formula (I).
[3] The nonaqueous electrolytic solution according to [1] or [2], wherein R¹ and R² are each independently one selected from a hydrogen atom, a halogen atom, a vinyl group, and an allyl group, and either one of R¹ and R² is selected from a vinyl group and an allyl group.
[4] The nonaqueous electrolytic solution according to any one of [1] to [3], further comprising 0.001% by mass or more and 5% by mass or less of one or more anion-containing compounds selected from the group consisting of a phosphate anion-containing compound having a P-F bond and a P=O bond, an anion-containing compound having a S=O bond, and an oxalate complex anion-containing compound, in the nonaqueous electrolytic solution.
[5] The nonaqueous electrolytic solution according to any one of [1] to [4], wherein the nonaqueous electrolytic solution comprises 0.01% by mass or more and 10% by mass or less of the compound (A).
[6] The nonaqueous electrolytic solution for a battery according to any one of [1] to [5], wherein the nonaqueous electrolytic solution further comprises one or more selected from the group consisting of a cyclic carbonate having a carbon-carbon unsaturated bond and a fluorine-atom-containing cyclic carbonate.
[7] The nonaqueous electrolytic solution for a battery according to any one of [1] to [6], wherein the nonaqueous electrolytic solution further comprises a linear carboxylate.
[8] A nonaqueous electrolytic solution battery comprising: a positive electrode having a positive electrode active material capable of absorbing and releasing a metal ion; a negative electrode having a negative electrode active material capable of absorbing and releasing a metal ion; and the nonaqueous electrolytic solution according to any one of [1] to [7].
[9] The nonaqueous electrolytic solution battery according to [8], wherein the positive electrode comprises a lithium transition metal-based compound (B) represented by the following composition formula (5) as a positive electrode active material:

   Li_{1+y2}MO₂ (5)

   wherein y2 is -0.1 or more and 0.5 or less, M is a transition metal element comprising at least Ni, and a molar ratio (Ni/M) of a content of Ni to a content of all elements comprised in M is 0.40 or more and 1.0 or less.
[10] The nonaqueous electrolytic solution battery according to [8] or [9], wherein the negative electrode active material comprises a material comprising a metal element and/or a metalloid element capable of being alloyed with Li.

### Advantageous Effects of Invention

According to the present invention, it is possible to provide: 1) a nonaqueous electrolytic solution which can improve a direct current resistance (DCR) retention rate after high-temperature storage and suppress an increase in a gas generation amount after high-temperature storage by being used in a nonaqueous electrolytic solution battery; 2) a nonaqueous electrolytic solution which can improve a recovery capacity retention rate by being used in a nonaqueous electrolytic solution battery; 3) a nonaqueous electrolytic solution which can improve a capacity retention rate after cycle charging and discharging and suppress electrode swelling and resistance after cycles by being used in a nonaqueous electrolytic solution battery; and 4) a nonaqueous electrolytic solution which can suppress an increase in internal resistance by being used in a nonaqueous electrolytic solution battery in spite of comprising a carboxylate having high reduction reactivity in a negative electrode as a nonaqueous solvent; and a nonaqueous electrolytic solution battery using the nonaqueous electrolytic solution.

### Description of Embodiments

In the following description, a plurality of aspects will be described, but in the second to fourth aspects, when it is described as the same as in the first aspect, it means that the description of the compound, the other component, the type, the content, the ratio, and the like are the same as in the first aspect, including preferable descriptions thereof.

### [1. Nonaqueous Electrolytic Solution]

The nonaqueous electrolytic solution of the present invention comprises a compound (A) represented by formula (I) (hereinafter, also referred to as "compound (A)").

### <First Aspect>

A first aspect of the present invention is the nonaqueous electrolytic solution for a nonaqueous electrolytic solution battery having a positive electrode in which a positive electrode active material comprises a specific lithium transition metal-based compound. Further, a first aspect of the present invention is use of the nonaqueous electrolytic solution for a nonaqueous electrolytic solution battery having a positive electrode in which a positive electrode active material comprises a specific lithium transition metal-based compound. Details of the positive electrode comprising the specific lithium transition metal-based compound in the first aspect will be described later.

The present inventors presume the reason why the nonaqueous electrolytic solution of the first aspect exhibits excellent effects of improving the direct current resistance (DCR) retention rate after high-temperature storage and suppressing an increase in the gas generation amount after high-temperature storage by being used in the nonaqueous electrolytic solution battery as follows.

When the compound (A) containing a carbon-carbon unsaturated bond comprised in the nonaqueous electrolytic solution is polymerized on the positive electrode along with the charging and discharging of the nonaqueous electrolytic solution battery, the compound (A) acts on the Ni site of the lithium transition metal-based compound (B) (hereinafter, also referred to as "compound (B)") represented by the composition formula (1) comprised in the positive electrode active material possessed by the positive electrode in particular to form a surface film, thereby suppressing a side reaction between the positive electrode and the nonaqueous electrolytic solution. Therefore, in a nonaqueous electrolytic solution battery using the nonaqueous electrolytic solution of the first aspect, the DCR retention rate after high-temperature storage can be improved, and an increase in the gas generation amount after high-temperature storage can be suppressed.

### [1-1. Compound (A)]

The compound (A) represented by formula (I) comprised in the nonaqueous electrolytic solution of the present invention (hereinafter, also referred to as "compound (A)") will be described in detail below.

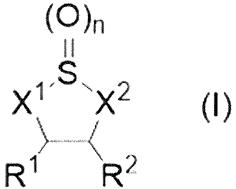

In formula (I), X¹ and X² are each independently an oxygen atom or CH₂, R¹ and R² are each independently a hydrogen atom, a halogen atom, or a hydrocarbon group, and n is 1 or 2. Here, either one of R¹ and R² is a hydrocarbon group containing at least one carbon-carbon unsaturated bond. When n is 2, at least one of X¹ and X² is CH₂.

Among these, a sulfite structure in which X¹ is an oxygen atom, X² is an oxygen atom, and n is 1; and a sulfonate structure in which X¹ is an oxygen atom, X² is CH₂, and n is 2 are preferable, and a sulfite structure in which X¹ is an oxygen atom, X² is an oxygen atom, and n is 1 is more preferable.

Either one of R¹ and R² is a hydrocarbon group containing at least one carbon-carbon unsaturated bond. Examples of the hydrocarbon group containing at least one carbon-carbon unsaturated bond include an alkenyl group having 2 to 8 carbon atoms, an alkynyl group having 2 to 8 carbon atoms, an aryl group having 4 to 12 carbon atoms, and an aralkyl group having 7 to 10 carbon atoms. The aryl group and the aralkyl group include a heteroaryl group and a heteroaralkyl group in which a carbon atom constituting an arbitrary aromatic ring is substituted with a hetero atom, respectively. In a case where R¹ and R² are each a hydrocarbon group containing a carbon-carbon unsaturated bond, an alkenyl group having 2 to 8 carbon atoms or an alkynyl group having 2 to 8 carbon atoms is preferable, and an alkenyl group having 2 to 8 carbon atoms is more preferable.

In a case where R¹ and R² are each a saturated hydrocarbon group, examples of the hydrocarbon group include an alkyl group having 1 to 10 carbon atoms.

Examples of the alkenyl group include a vinyl group, an allyl group, a methallyl group, a 2-butenyl group, a 3-methyl-2-butenyl group, a 3-butenyl group, a 4-pentenyl group, a 5-hexenyl group, a 6-heptenyl group, and a 7-octenyl group. Among these, from the viewpoint of solubility in an electrolytic solution, an alkenyl group having 2 to 6 carbon atoms is preferable, and a vinyl group and an allyl group are more preferable.

Examples of the alkynyl group include an ethynyl group, a 2-propynyl group, a 2-butynyl group, a 3-butynyl group, a 4-pentynyl group, a 5-hexynyl group, a 6-heptynyl group, and a 7-octynyl group. Among these, from the viewpoint of solubility in an electrolytic solution, an alkynyl group having 2 to 6 carbon atoms is preferable, and an ethynyl group is more preferable.

Examples of the aryl group include a phenyl group, a 1-naphthyl group, a 2-naphthyl group, a 2-thienyl group, a 3-thienyl group, a 2-furyl group, a 3-furyl group, a 2-pyrrolyl group, a 3-pyrrolyl group, and a benzyl group. Among these, from the viewpoint of solubility in an electrolytic solution, an aryl group having 6 to 12 carbon atoms is preferable, and a phenyl group is more preferable.

Examples of the aralkyl group include a benzyl group, a phenethyl group, a phenylpropyl group, a phenylbutyl group, and a phenylisopropyl group. Among these, from the viewpoint of solubility to an electrolytic solution, a benzyl group and a phenethyl group are preferable, and a benzyl group is more preferable.

Examples of the alkyl group include a methyl group, an ethyl group, a n-propyl group, an iso-propyl group, a n-butyl group, a tert-butyl group, a n-pentyl group, a hexyl group, a heptyl group, an octyl group, a nonyl group, and a decyl group. Among these, from the viewpoint of solubility in an electrolytic solution, an alkyl group having 1 to 6 carbon atoms is preferable, and a methyl group, an ethyl group, and an iso-propyl group are more preferable.

R¹ and R² in the formula (I) may be bonded to each other to form a cyclic structure. Examples of the cyclic structure include unsaturated carbon rings other than aromatic rings, such as a cyclohexene ring and a cyclopentene ring. Among these, a cyclohexene ring is preferable from the viewpoint of stability in an electrolytic solution.

When R¹ or R² is a hydrocarbon group, a carbon atom in the hydrocarbon group may be substituted with an oxygen atom, and a hydrogen atom may be substituted with a halogen atom. Examples of the halogen atom include a fluorine atom, a chlorine atom, a bromine atom, and an iodine atom.

In the formula (I), R¹ and R² are preferably each independently one selected from a hydrogen atom, a halogen atom, a vinyl group, and an allyl group, and either one of R¹ and R² is selected from a vinyl group and an allyl group, because the compound (A) tends to be polymerized by reaction on an electrode. Among these, a combination in which either one of R¹ and R² is a vinyl group and the other is a hydrogen atom is preferable.

Among the compounds (A) represented by the formula (I), a compound represented by the following formula (II) having a sulfite structure in which X¹ is an oxygen atom, X² is an oxygen atom, and n is 1 is preferable.

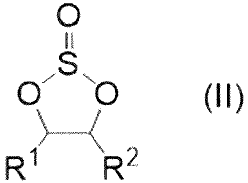

In the formula (II), R¹ and R² have the same definitions as R¹ and R² in the formula (I).

Specific examples of the compound represented by the formula (II) include compounds represented by the following structural formulas.

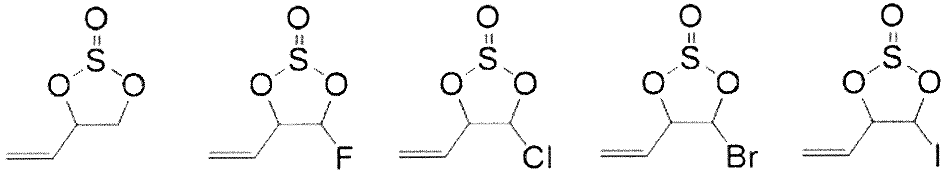

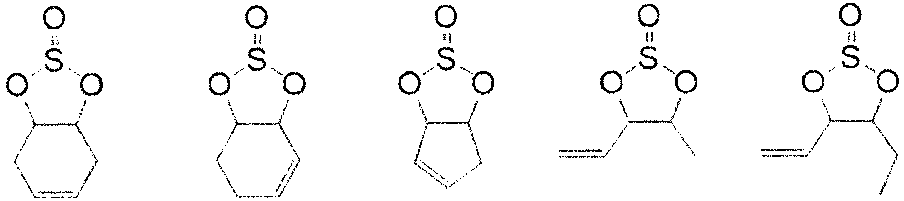

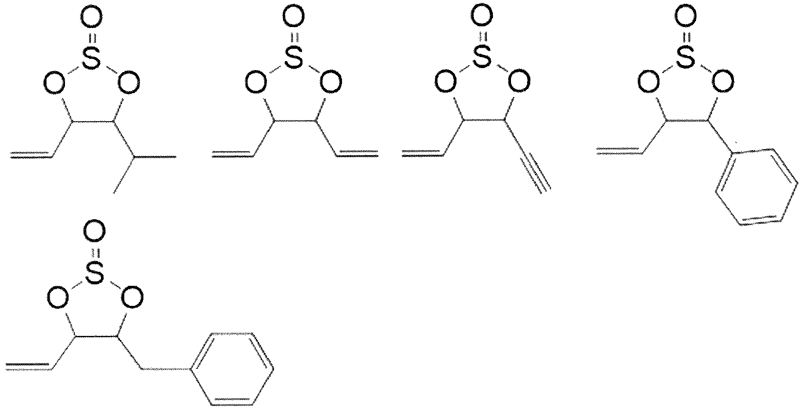

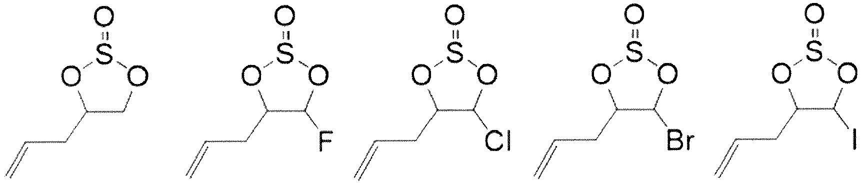

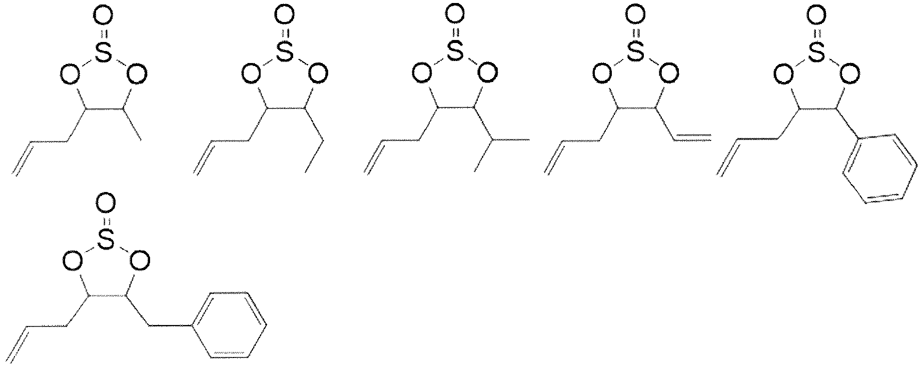

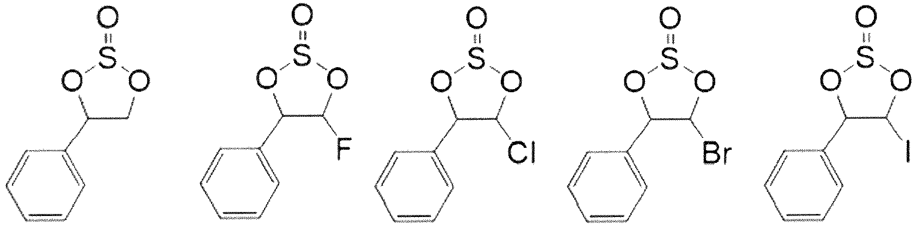

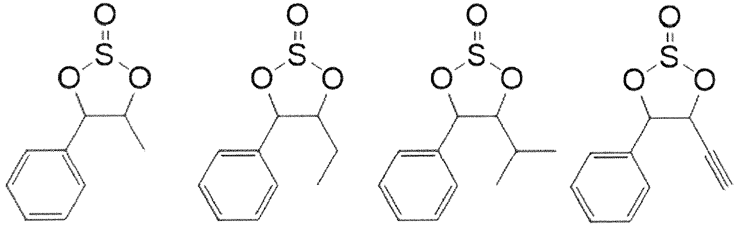

Among the compounds described above, as the compound represented by the formula (II), compounds represented by the following structural formulas are preferable.

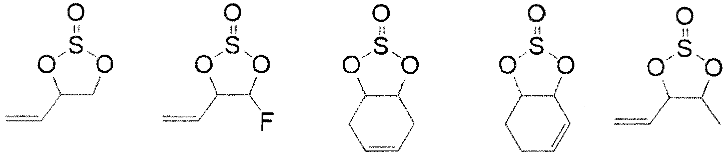

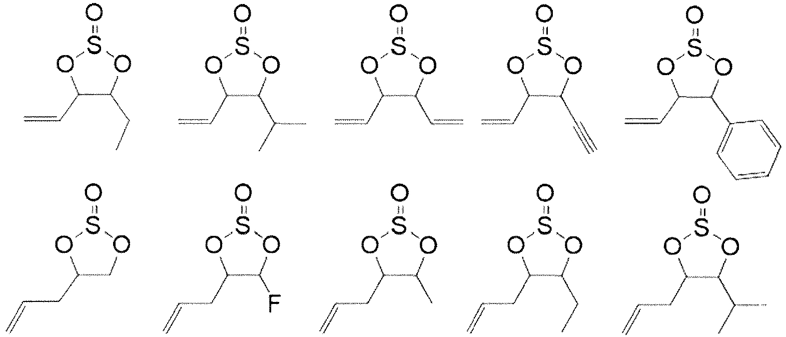

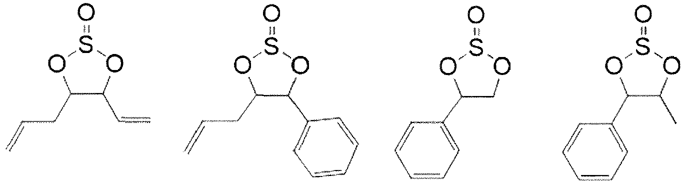

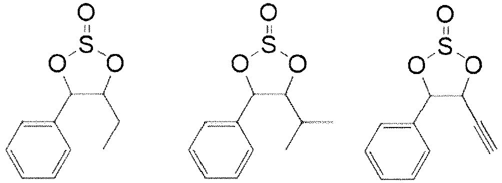

Among the compounds represented by the above formula (II), more preferred are compounds represented by the following structural formulas.

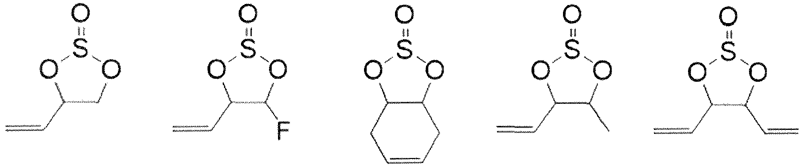

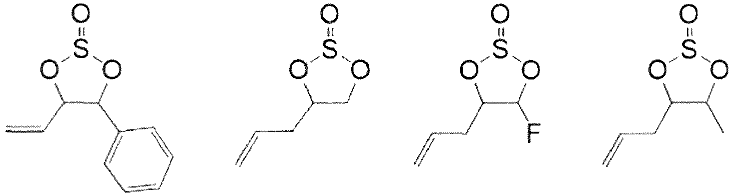

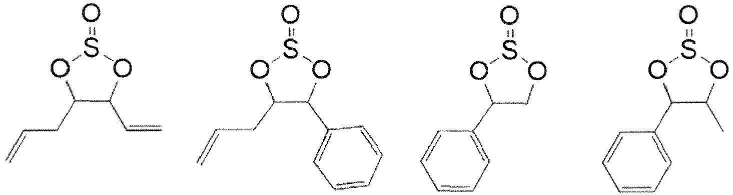

Among the compounds represented by the above formula (II), still more preferred are compounds represented by the following structural formulas.

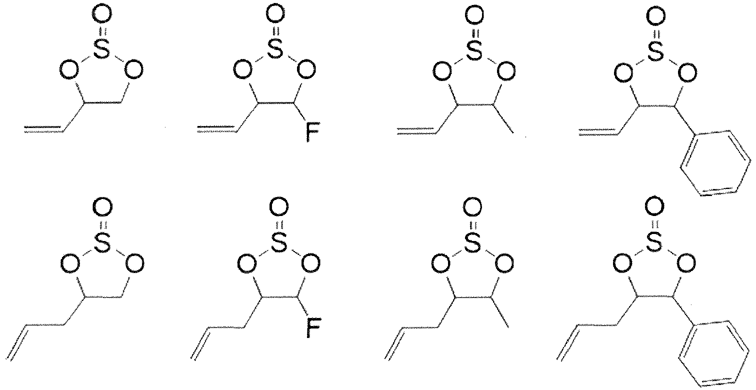

Among the compounds represented by the above formula (II), particularly preferred are compounds represented by the following structural formulas.

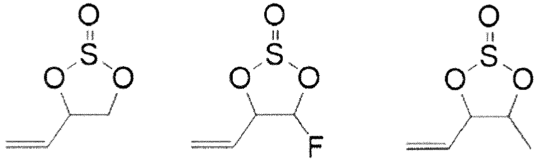

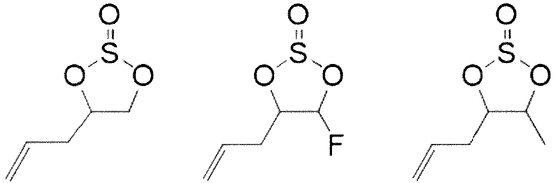

Among the compounds represented by the above formula (II), a compound represented by the following structural formula is most preferable.

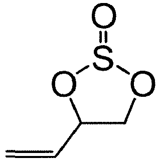

Specific examples of the compound (A) represented by the formula (I) other than the compound represented by the formula (II) are shown below.

Specific examples of the compound having a sulfone structure in which X¹ is CH₂, X² is CH₂, and n is 2 in the formula (I) include compounds represented by the following structural formulas.

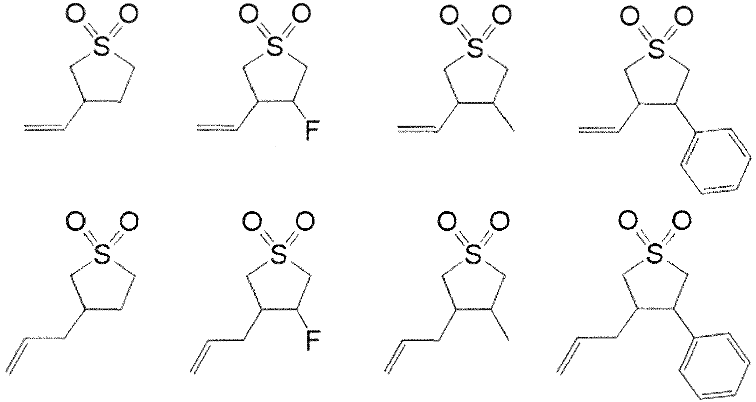

Specific examples of the compound having a sulfonate structure in which X¹ is an oxygen atom, X² is CH₂, and n is 2 in the formula (I) include compounds represented by the following structural formulas.

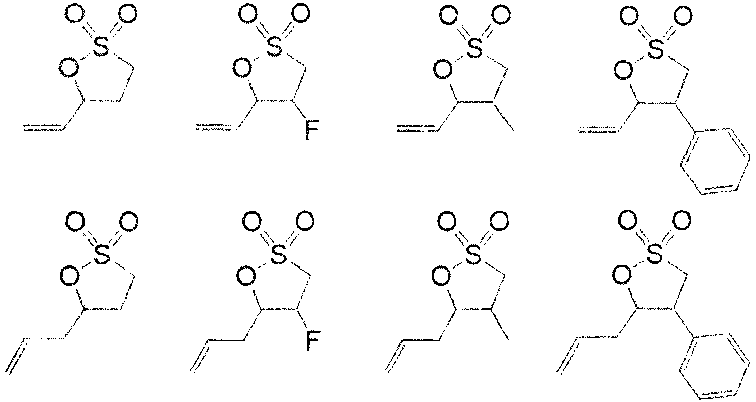

Specific examples of the compound having a sulfonate structure in which X¹ is CH₂, X² is an oxygen atom, and n is 2 in the formula (I) include compounds represented by the following structural formulas.

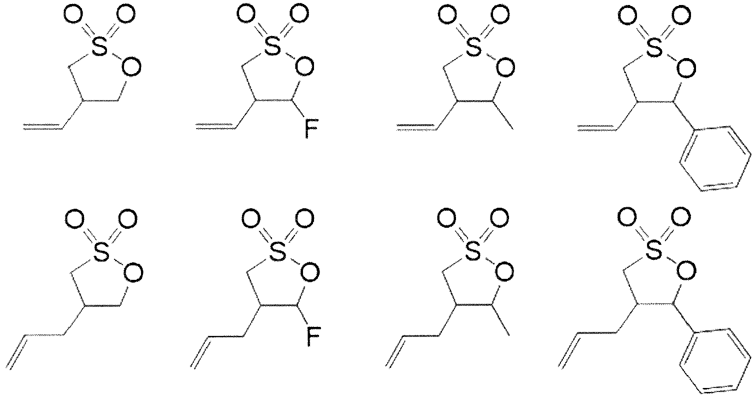

### (Content of Compound (A))

The content of the compound (A) in the total amount (100% by mass) of the nonaqueous electrolytic solution is generally 0.01% by mass or more, preferably 0.05% by mass or more, and more preferably 0.1% by mass or more, and is generally 10% by mass or less, preferably 8% by mass or less, more preferably 6% by mass or less, and still more preferably 4% by mass or less. The content of the compound (A) is usually 0.01% by mass or more and 10% by mass or less, preferably 0.05% by mass or more and 8% by mass or less, more preferably 0.1% by mass or more and 6% by mass or less, and still more preferably 0.1% by mass or more and 4% by mass or less. When the content of the compound (A) is within this range, in nonaqueous electrolytic solution batteries, 1) the DCR retention rate after high-temperature storage can be improved and an increase in the gas generation amount after high-temperature storage can be suppressed, 2) the recovery capacity retention rate can be improved, 3) the capacity retention rate after cycle charging and discharging can be improved and electrode swelling and resistance after cycles can be suppressed, and 4) an increase in internal resistance can be suppressed. The compound (A) may be used alone or in combination of two or more thereof in any combination and in an arbitrary ratio. Identification of the compound represented by the formula (I) and measurement of the content thereof are performed by nuclear magnetic resonance (NMR) spectroscopy and/or gas chromatography.

### (Mass Ratio of Compound (A) to Electrolyte)

In the nonaqueous electrolytic solution, the mass ratio of the content of the compound (A) (the total amount in the case of two or more kinds) to the content of the electrolyte (compound (A) [g]/electrolyte [g]) is usually 0.001 or more, preferably 0.01 or more, more preferably 0.02 or more, still more preferably 0.025 or more, and even more preferably 0.03 or more, and is usually 0.5 or less, preferably 0.3 or less, more preferably 0.2 or less, and still more preferably 0.1 or less. The mass ratio is usually 0.001 or more and 0.5 or less, preferably 0.01 or more and 0.3 or less, more preferably 0.02 or more and 0.2 or less, still more preferably 0.025 or more and 0.1 or less, and even more preferably 0.03 or more and 0.1 or less.

When the mass ratio is within this range, in nonaqueous electrolytic solution batteries, 1) the DCR retention rate after high-temperature storage can be improved and an increase in the gas generation amount after high-temperature storage can be suppressed, 2) the recovery capacity retention rate can be improved, 3) the capacity retention rate after cycle charging and discharging can be improved and electrode swelling and resistance after cycles can be suppressed, and 4) an increase in internal resistance can be suppressed. The principle of exhibiting this effect is not clear, but it is considered that by setting the mass ratio of the content of the compound (A) to the content of the electrolyte in this range, a side reaction of the electrolyte in the battery system is suppressed to the minimum.

### [1-2. Electrolyte]

Examples of the electrolyte in the nonaqueous electrolytic solution include lithium salts. The lithium salt is not particularly limited, and any lithium salt can be used. Examples of the lithium salt include lithium fluoroborate salts, lithium fluorophosphate salts, lithium tungstate salts, lithium carboxylate salts, lithium sulfonate salts, lithium imide salts, lithium methide salts, lithium oxalate salts, and fluorine-containing organic lithium salts.

Among these, from the viewpoint of improving low-temperature output properties, high-rate charging and discharging properties, impedance properties, high-temperature storage properties, cycle properties, and the like, preferred are lithium fluoroborate salts, such as LiBF₄; lithium fluorophosphate salts, such as LiPF₆, Li₂PO₃F, and LiPO₂F₂; lithium sulfonate salts, such as LiSO₃F and LiCH₃SO₃; lithium imide salts, such as LiN(FSO₂)₂, LiN(FSO₂)(CF₃SO₂), LiN(CF₃SO₂)₂, and LiN(C₂F₅SO₂)₂; lithium cyclic 1,2-perfluoroethanedisulfonylimide, and lithium cyclic 1,3-perfluoropropanedisulfonylimide; lithium methide salts, such as LiC(FSO₂)₃, LiC(CF₃SO₂)₃, and LiC(C₂F₅SO₂)₃; and lithium oxalate salts, such as lithium difluorooxalatoborate, lithium bis(oxalate)borate, lithium tetrafluorooxalatophosphate, lithium difluorobis(oxalate)phosphate, and lithium tris(oxalate)phosphate, more preferred are one or more selected from LiPF₆, LiN(FSO₂)₂, lithium bis(oxalate)borate, and LiSO₃F, and particularly preferred is LiPF₆.

The above-mentioned electrolyte may be used alone or in combination of two or more thereof in an arbitrary ratio.

The combination of two or more kinds of electrolytes is not particularly limited, and examples thereof include a combination of LiPF₆ and LiN(FSO₂)₂, a combination of LiPF₆ and LiBF₄, a combination of LiPF₆ and LiN(CF₃SO₂)₂, a combination of LiBF₄ and LiN(FSO₂)₂, and a combination of LiBF₄, LiPF₆, and LiN(FSO₂)₂. Among these, a combination of LiPF₆ and LiN(FSO₂)₂, a combination of LiPF₆ and LiBF₄, and a combination of LiBF₄, LiPF₆, and LiN(FSO₂)₂ are preferable.

The total concentration of the electrolytes is not particularly limited, but is usually 8% by mass or more, preferably 8.5% by mass or more, and more preferably 9% by mass or more, and is usually 18% by mass or less, preferably 17% by mass or less, and more preferably 16% by mass or less, with respect to the total amount of the nonaqueous electrolytic solution, from the viewpoint that the electrical conductivity makes the battery operation appropriate and sufficient output properties are exhibited. Identification of the electrolyte and measurement of the content thereof are performed by nuclear magnetic resonance (NMR) spectroscopy and/or ion chromatography.

### [1-3. Nonaqueous Solvent]

The nonaqueous electrolytic solution comprises a nonaqueous solvent as in general nonaqueous electrolytic solution, and the nonaqueous solvents are not particularly limited as long as they dissolve the above-mentioned electrolytes, and known organic solvents can be used.

Examples of the organic solvent include, but are not particularly limited to, a saturated cyclic carbonate, a linear carbonate, a linear carboxylate, a cyclic carboxylate, a cyclic ether compound, and a sulfone compound.

The organic solvent may be used alone or in combination of two or more thereof in an arbitrary ratio.

The combination of two or more kinds of organic solvents is not particularly limited, and examples thereof include a combination of a saturated cyclic carbonate and a linear carbonate, a combination of a cyclic carboxylate and a linear carbonate, and a combination of a saturated cyclic carbonate, a linear carbonate, and a linear carboxylate. Among these, a combination of a saturated cyclic carbonate and a linear carbonate and a combination of a saturated cyclic carbonate, a linear carbonate, and a linear carboxylate are preferable, a combination of a saturated cyclic carbonate and a linear carbonate is more preferable, a combination of ethylene carbonate, ethyl methyl carbonate, and dimethyl carbonate or a combination of ethylene carbonate, ethyl methyl carbonate, and diethyl carbonate is still more preferable, and a combination of ethylene carbonate, ethyl methyl carbonate, and dimethyl carbonate is particularly preferable.

### [1-3-1. Saturated Cyclic Carbonate]

Examples of the saturated cyclic carbonate include those having an alkylene group having 2 to 4 carbon atoms, and a saturated cyclic carbonate having an alkylene group having 2 to 3 carbon atoms is preferable from the viewpoint of improving battery characteristics caused by an improvement in the degree of dissociation of metal ions, particularly lithium ions.

Specific examples of the saturated cyclic carbonate include ethylene carbonate, propylene carbonate, and butylene carbonate. Among these, ethylene carbonate or propylene carbonate is preferable, and ethylene carbonate which is less likely to be oxidized and reduced is more preferable. The saturated cyclic carbonate may be used alone or in combination of two or more thereof in an arbitrary ratio.

The content of the saturated cyclic carbonate is not particularly limited, and is arbitrary as long as the effect of the invention according to the present embodiment is not impaired. The content of the saturated cyclic carbonate is usually 3% by volume or more, preferably 5% by volume or more, and more preferably 10% by volume or more, and on the other hand, is usually 90% by volume or less, preferably 85% by volume or less, more preferably 80% by volume or less, and still more preferably 60% by volume or less, with respect to the total amount of the nonaqueous solvent. By setting the content within this range, a decrease in electrical conductivity caused by a decrease in the dielectric constant of the nonaqueous electrolytic solution is avoided, and the large current discharging properties, the stability with respect to the negative electrode, and the cycle properties of the nonaqueous electrolytic solution battery are easily set to be in a favorable range, the oxidation and reduction resistance of the nonaqueous electrolytic solution is improved, and the stability during high-temperature storage tends to be improved.

In the present specification, "% by volume" means % by volume at 25°C and 1 atm.

### [1-3-2. Linear Carbonate]

Examples of the linear carbonate include linear carbonates having 3 to 7 carbon atoms, and in order to adjust the viscosity of the nonaqueous electrolytic solution to an appropriate range, linear carbonates having 3 to 5 carbon atoms are preferable.

Specific examples of the linear carbonate include dimethyl carbonate, diethyl carbonate, di-n-propyl carbonate, diisopropyl carbonate, n-propyl isopropyl carbonate, ethyl methyl carbonate, and methyl-n-propyl carbonate. The linear carbonate is preferably one or more selected from dimethyl carbonate, diethyl carbonate, and ethyl methyl carbonate.

Linear carbonates having a fluorine atom (hereinafter, also referred to as "fluorinated linear carbonate") can also be suitably used. The number of fluorine atoms contained in the fluorinated linear carbonate is not particularly limited as long as it is 1 or more, but is preferably 6 or less, and more preferably 4 or less. When the fluorinated linear carbonate has a plurality of fluorine atoms, the plurality of fluorine atoms may be bonded to the same carbon or may be bonded to different carbons.

Examples of the fluorinated linear carbonate include a fluorinated dimethyl carbonate derivative, such as fluoromethyl methyl carbonate; a fluorinated ethyl methyl carbonate derivative, such as 2-fluoroethyl methyl carbonate; and a fluorinated diethyl carbonate derivative, such as ethyl-(2-fluoroethyl) carbonate.

The linear carbonate may be used alone or in combination of two or more thereof in an arbitrary ratio.

The content of the linear carbonate is not particularly limited, but is usually 15% by volume or more, preferably 20% by volume or more, and more preferably 25% by volume or more, and is usually 90% by volume or less, preferably 85% by volume or less, and more preferably 80% by volume or less, with respect to the total amount of the nonaqueous solvent in the nonaqueous electrolytic solution, from the viewpoint of setting the viscosity of the nonaqueous electrolytic solution in an appropriate range, suppressing a decrease in ion conductivity, and improving the output properties of the nonaqueous electrolytic solution battery.

Furthermore, by combining a specific linear carbonate and ethylene carbonate at a specific content, battery performance can be significantly improved.

For example, when dimethyl carbonate and ethyl methyl carbonate are selected as the specific linear carbonate, the content of ethylene carbonate is usually 15% by volume or more, and preferably 20% by volume or more, and is usually 45% by volume or less, and preferably 40% by volume or less, with respect to the total amount of the solvent in the nonaqueous electrolytic solution, from the viewpoint of improving high-temperature stability and suppressing gas generation; the content of dimethyl carbonate is usually 20% by volume or more, and preferably 25% by volume or more, and is usually 40% by volume or less, and preferably 35% by volume or less, with respect to the total amount of the nonaqueous solvent in the nonaqueous electrolytic solution; and the content of ethyl methyl carbonate is usually 20% by volume or more, and preferably 25% by volume or more, and is usually 40% by volume or less, and preferably 35% by volume or less, with respect to the total amount of the nonaqueous solvent in the nonaqueous electrolytic solution.

In addition, when diethyl carbonate and ethyl methyl carbonate are selected as the specific linear carbonate, the content of ethylene carbonate is usually 15% by volume or more, and preferably 20% by volume or more, and is usually 40% by volume or less, and preferably 35% by volume or less, with respect to the total amount of the solvent in the nonaqueous electrolytic solution, from the viewpoint of improving high-temperature stability and suppressing gas generation; the content of diethyl carbonate is usually 15% by volume or more, and preferably 20% by volume or more, and is usually 40% by volume or less, and preferably 35% by volume or less, with respect to the total amount of the nonaqueous solvent in the nonaqueous electrolytic solution; and the content of ethyl methyl carbonate is usually 30% by volume or more, and preferably 35% by volume or more, and is usually 50% by volume or less, and preferably 45% by volume or less, with respect to the total amount of the nonaqueous solvent in the nonaqueous electrolytic solution.

### [1-3-3. Linear Carboxylate]

Examples of the linear carboxylate include methyl acetate, ethyl acetate, propyl acetate, butyl acetate, methyl propionate, ethyl propionate, propyl propionate, methyl butyrate, ethyl butyrate, methyl valerate, methyl isobutyrate, ethyl isobutyrate, and methyl pivalate. Among these, methyl acetate, ethyl acetate, propyl acetate, and butyl acetate are preferable from the viewpoint of improving battery characteristics. Linear carboxylates obtained by substituting a part of hydrogen atoms of the above compounds with a fluorine atom (for example, methyl trifluoroacetate, ethyl trifluoroacetate, and the like) can also be suitably used.

In the case of comprising the linear carboxylate, the blending amount thereof is usually 1% by volume or more, preferably 5% by volume or more, and more preferably 15% by volume or more with respect to the total amount of the nonaqueous solvent, from the viewpoint of improving the electrical conductivity of the nonaqueous electrolytic solution and improving the large current discharging properties of the nonaqueous electrolytic solution battery. In addition, the upper limit of the blending amount thereof is usually 70% by volume or less, preferably 50% by volume or less, and more preferably 40% by volume or less from the viewpoint of setting the viscosity of the nonaqueous electrolytic solution within an appropriate range, avoiding a decrease in electrical conductivity, suppressing an increase in negative electrode resistance, and setting the large current discharging properties of the nonaqueous electrolytic solution battery within a favorable range.

### 1 -3 -4. Cyclic Carboxylate]

Examples of the cyclic carboxylate include γ-butyrolactone and γ-valerolactone. Among these, γ-butyrolactone is more preferable. Cyclic carboxylates obtained by substituting a part of hydrogen atoms of the above compounds with a fluorine atom can also be suitably used.

When the nonaqueous electrolytic solution comprises the cyclic carboxylate, the content thereof is usually 1% by volume or more, preferably 5% by volume or more, and more preferably 15% by volume or more with respect to the total amount of the nonaqueous solvent, from the viewpoint of improving the electrical conductivity of the nonaqueous electrolytic solution and improving the large current discharging properties of the nonaqueous electrolytic solution battery. In addition, the upper limit of the blending amount thereof is usually 70% by volume or less, preferably 50% by volume or less, and more preferably 40% by volume or less from the viewpoint of setting the viscosity of the nonaqueous electrolytic solution within an appropriate range, avoiding a decrease in electrical conductivity, suppressing an increase in negative electrode resistance, and setting the large current discharging properties of the nonaqueous electrolytic solution battery within a favorable range.

### 1 -3 -5. Cyclic Ether Compound]

Examples of the cyclic ether compound include cyclic ethers having 3 to 6 carbon atoms, such as tetrahydrofuran, 2-methyltetrahydrofuran, 3-methyltetrahydrofuran, 1,3-dioxane, 2-methyl-1,3-dioxane, 4-methyl-1,3-dioxane, and 1,4-dioxane. Some of the hydrogen atoms of the cyclic ether compound may be substituted with a fluorine atom.

Among these, tetrahydrofuran, 1,3-dioxane, and 1,4-dioxane are preferable from the viewpoint of providing high ion conductivity.

When the nonaqueous electrolytic solution comprises the cyclic ether compound, the content thereof is arbitrary as long as the effects of the present invention are not impaired, but is usually 1% by volume or more, preferably 2% by volume or more, and more preferably 3% by volume or more, and is usually 30% by volume or less, preferably 25% by volume or less, and more preferably 20 vol% or less, with respect to the total amount of the nonaqueous solvent in the nonaqueous electrolytic solution. When the content of the cyclic ether compound is within the above range, it is easy to secure the effect of improving the degree of dissociation of metal ions, in particular, lithium ions, by the cyclic ether compound and the effect of improving ion conductivity caused by a decrease in the viscosity of the nonaqueous electrolytic solution. In addition, when the negative electrode active material is a carbon-based material, it is possible to suppress a phenomenon in which linear ether is co-inserted together with metal ions, in particular, lithium ions, and thus it is possible to set input and output properties or charging and discharging rate properties to be in an appropriate range.

### [1-3-6. Sulfone Compound]

The sulfone compound is not particularly limited, and may be a cyclic sulfone or a linear sulfone. In the case of a cyclic sulfone, the number of carbon atoms is usually 3 to 6, and preferably 3 to 5, and in the case of a linear sulfone, the number of carbon atoms is usually 2 to 6, and preferably 2 to 5. The number of sulfonyl groups in one molecule of the sulfone compound is not particularly limited, but is usually 1 or 2.

Examples of the cyclic sulfone include monosulfone compounds, such as trimethylene sulfones, tetramethylene sulfones, and hexamethylene sulfones; and disulfone compounds, such as trimethylene disulfones, tetramethylene disulfones, and hexamethylene disulfones. Among these, from the viewpoint of dielectric constant and viscosity, tetramethylene sulfones, tetramethylene disulfones, hexamethylene sulfones, and hexamethylene disulfones are more preferable, and tetramethylene sulfones (sulfolanes) are still more preferable.

As sulfolanes, sulfolane and sulfolane derivatives are preferable. The sulfolane derivative is preferably one in which at least one hydrogen atom bonded to a carbon atom constituting a sulfolane ring is substituted with a fluorine atom, an alkyl group, or a fluorine-substituted alkyl group.

Among these, 2-methylsulfolane, 3-methylsulfolane, 2-fluorosulfolane, 3-fluorosulfolane, 2,3-difluorosulfolane, 2-trifluoromethylsulfolane, 3-trifluoromethylsulfolane, and the like are preferable from the viewpoint of high ion conductivity and high input and output.

In addition, examples of the linear sulfone include dimethyl sulfone, ethyl methyl sulfone, diethyl sulfone, monofluoromethyl methyl sulfone, difluoromethyl methyl sulfone, trifluoromethyl methyl sulfone, and pentafluoroethyl methyl sulfone. Among these, dimethyl sulfone, ethyl methyl sulfone, and monofluoromethyl methyl sulfone are preferable from the viewpoint of improving high-temperature storage stability of the nonaqueous electrolytic solution.

When the nonaqueous electrolytic solution comprises a sulfone compound, the content thereof is arbitrary as long as the effects of the present invention are not impaired, but from the viewpoint of improving high-temperature storage stability, it is usually 0.3% by volume or more, preferably 0.5% by volume or more, and more preferably 1% by volume or more, and is usually 40% by volume or less, preferably 35% by volume or less, and more preferably 30% by volume or less, with respect to the total amount of the nonaqueous solvent in the nonaqueous electrolytic solution.

### [1-4. Auxiliary Agent]

Examples of the auxiliary agent which may be comprised in the nonaqueous electrolytic solution include a cyclic carbonate having a carbon-carbon unsaturated bond, a fluorine-containing cyclic carbonate, a compound having an isocyanate group, an organic compound having an isocyanuric acid skeleton, a sulfur-containing organic compound, a phosphorus-containing organic compound, an organic compound having a cyano group, a silicon-containing compound, an aromatic compound, a fluorine-free carboxylate, a cyclic compound having an ether bond, a carboxylic acid anhydride, a borate anion-containing compound, a phosphate anion-containing compound having a P-F bond and a P=O bond, an anion-containing compound having a S=O bond, and an oxalate complex anion-containing compound. Examples thereof include compounds described in WO 2015/111676.

Among these, at least one kind of anion-containing compound (hereinafter, also referred to as a "specific anion-containing compound (X)") selected from a phosphate anion-containing compound having a P-F bond and a P=O bond, an anion-containing compound having a S=O bond, and an oxalate complex anion-containing compound, and/or one or more carbonate compounds (hereinafter, also referred to as a "specific carbonate compound (Y)") selected from a cyclic carbonate having a carbon-carbon unsaturated bond and a fluorine-containing cyclic carbonate are preferable.

The content of the auxiliary agent is not particularly limited and is arbitrary as long as the effects of the present invention are not significantly impaired, but is usually 0.001% by mass or more, preferably 0.01% by mass or more, and more preferably 0.1% by mass or more, and is usually 10% by mass or less, preferably 5% by mass or less, more preferably 3% by mass or less, still more preferably 1% by mass or less, and particularly preferably less than 1% by mass with respect to the total amount of the nonaqueous electrolytic solution. In addition, the content of the auxiliary agent is usually 0.001% by mass or more and 10% by mass or less, preferably 0.01% by mass or more and 5% by mass or less, more preferably 0.1% by mass or more and 3% by mass or less, still more preferably 0.1% by mass or more and 1% by mass or less, and particularly preferably 0.1% by mass or more and less than 1% by mass with respect to the total amount of the nonaqueous electrolytic solution.

The cyclic compound having an ether bond can be used as an auxiliary agent in the nonaqueous electrolytic solution, and as shown in [1-3. Nonaqueous Solvent], those which can be used as nonaqueous solvents are also included.

When a cyclic compound having an ether bond is used as an auxiliary agent, it is preferably used in an amount of less than 4% by mass. The borate anion-containing compound, the oxalate complex anion-containing compound, the monofluorophosphate anion-containing compound, and the difluorophosphate anion-containing compound can be used as auxiliary agents in the nonaqueous electrolytic solution, and those which can be used as electrolytes as shown in [1-2. Electrolyte] are also included. When these compounds are used as auxiliary agents, they are preferably used in an amount of less than 3% by mass.

### [1-4-1. Specific Anion-Containing Compound (X)]

The specific anion-containing compound (X) is usually an acid or a salt. The specific anion-containing compound (X) is preferably a salt, and the counter cation is preferably an alkali metal cation, such as lithium, sodium, or potassium, and more preferably a lithium cation.

The specific anion-containing compound (X) may be used alone or in combination of two or more thereof in an arbitrary ratio.

Among these, a phosphate anion-containing compound having a P-F bond and a P=O bond is preferable from the viewpoint of suppressing the gas generation amount after high-temperature storage and from the viewpoint of suppressing electrode swelling and resistance after cycles.

### [1-4-1-1. Phosphate Anion-Containing Compound Having P-F Bond and P=O Bond]

Examples of the phosphate anion-containing compound having a P-F bond and a P=O bond include a compound containing a monofluorophosphate anion, such as PO₃F⁻ and a difluorophosphate anion, such as PO₂F₂⁻.

Examples of the salts of phosphate anions having a P-F bond and a P=O bond include salts of monofluorophosphate anions, such as Li₂PO₃F; and salts of difluorophosphate anions, such as LiPO₂F₂, NaPO₂F₂, and KPO₂F₂.

Among these, compounds containing difluorophosphate anions are preferable, and lithium difluorophosphate is more preferable, from the viewpoint of the balance between the output properties of the battery and the protection of the electrode interface.

### [1-4-1-2. Anion-Containing Compound Having S=O bond]

Examples of the anion-containing compound having a S=O bond include a compound containing a fluorosulfonate anion, such as SO₃F⁻; a fluorosulfonylimide anion, such as (FSO₂)₂N⁻ and (FSO₂)(CF₃SO₂)N⁻; or a fluorosulfonylmethide anion, such as (FSO₂)₃C⁻; and a compound containing an alkylsulfate anion, such as CH₃SO4⁻.

Examples of the salts of anions having a S=O bond include salts of fluorosulfonate anions, such as LiSO₃F, NaSO₃F, KSO₃F, (CH₃)₄NSO₃F, (C₂H₅)₄NSO₃F, and (n-C₄H₉)₄NSO₃F; salts of fluorosulfonylimide anions, such as LiN(FSO₂)₂ and LiN(FSO₂)(CF₃SO₂); salts of fluorosulfonylmethide anions, such as LiC(FSO₂)₃; and salts of alkylsulfate anions, such as LiCH₃SO₄ and LiC₂H₅SO₄.

Among these, from the viewpoint of the balance between the output properties of the battery and the protection of the electrode interface, a compound containing a fluorosulfonate anion or a fluorosulfonylimide anion is preferable, a salt of a fluorosulfonate anion and a salt of an alkylsulfate anion are more preferable, a salt of a fluorosulfonate anion is still more preferable, and lithium fluorosulfonate is particularly preferable.

### [1-4-1-3. Oxalate Complex Anion-Containing Compound]

The oxalate complex anion-containing compound is not particularly limited as long as it is a compound containing an anion having an oxalate complex in the molecule. The oxalate complex anion-containing compound is a compound containing an anion of an acid forming a complex by coordinating or bonding oxalic acid to a central atom, and examples thereof include a compound containing a boron oxalate complex anion in which oxalic acid is coordinated or bonded to a boron atom, and a compound containing a phosphorus oxalate complex anion in which oxalic acid is coordinated or bonded to a phosphorus atom.

Examples of the boron oxalate complex anion include a bis(oxalate)borate anion and a difluorooxalate borate anion, and examples of the phosphorus oxalate complex anion include a tetrafluorooxalate phosphate anion, a difluorobis(oxalate)phosphate anion, and a tris(oxalate)phosphate anion.

Examples of the oxalate complex anion-containing compound include salts of boron oxalate complex anions, such as lithium bis(oxalate)borate and lithium difluorooxalate borate; and salts of phosphorus oxalate complex anions, such as lithium tetrafluorooxalate phosphate, lithium difluorobis(oxalate)phosphate, and lithium tris(oxalate)phosphate.

Among these, from the viewpoint of forming a stable composite surface film on the surface of an electrode, a compound containing a boron oxalate complex anion is preferable, a compound containing a bis(oxalate)borate anion is more preferable, and lithium bis(oxalate)borate is particularly preferable.

### (Content of Specific Anion-Containing Compound (X))

In a case where the nonaqueous electrolytic solution comprises the specific anion-containing compound (X), the content of the specific anion-containing compound (X) (the total amount in the case of two or more kinds) in the total amount of the nonaqueous electrolytic solution is usually 0.001% by mass or more, preferably 0.01% by mass or more, and more preferably 0.1% by mass or more, and is usually 5% by mass or less, preferably 4% by mass or less, and more preferably 3% by mass or less. In addition, the content of the specific anion-containing compound (X) in the total amount of the nonaqueous electrolytic solution is usually 0.001% by mass or more and 5% by mass or less, preferably 0.01% by mass or more and 4% by mass or less, and more preferably 0. 1% by mass or more and 3% by mass or less.

When the content of the specific anion-containing compound (X) is within this range, it is possible to significantly suppress worsening of battery characteristics, in particular, the DCR retention rate after high-temperature storage, significantly suppress an increase in the gas generation amount after high-temperature storage, significantly improve the capacity retention rate after cycle charging and discharging, and significantly suppress electrode swelling and resistance after cycles. The reason for this is not clear, but it is considered that when the content of the specific anion-containing compound (X) is within the above range, a side reaction of a component of the nonaqueous electrolytic solution on the surface of an electrode can be suppressed to a minimum.

Identification of the specific anion-containing compound (X) and measurement of the content thereof are performed by nuclear magnetic resonance (NMR) spectroscopy and/or ion chromatography.

### (Mass Ratio of Specific Anion-Containing Compound (X) to Compound (A))

The mass ratio of the content of the specific anion-containing compound (X) (the total amount in the case of two or more kinds) to the content of the compound (A) (specific anion-containing compound (X) [g]/compound (A) [g]) is usually 0.01 or more, preferably 0.05 or more, and more preferably 0.3 or more, and is usually 100 or less, preferably 10 or less, more preferably 5 or less, and still more preferably 4 or less. The mass ratio is usually 0.01 or more and 100 or less, preferably 0.05 or more and 10 or less, more preferably 0.3 or more and 5 or less, and still more preferably 0.3 or more and 4 or less.

When the mass ratio is within the above range, it is possible to significantly suppress worsening of battery characteristics, in particular, the DCR retention rate after high-temperature storage, significantly suppress an increase in the gas generation amount after high-temperature storage, significantly improve the capacity retention rate after cycle charging and discharging, and significantly suppress electrode swelling and resistance after cycles. Although the principle of this is not clear, it is considered that by comprising the compound (A) and the specific anion-containing compound (X) in the above-described mass ratio range, a side reaction of a component of the nonaqueous electrolytic solution on the surface of an electrode can be suppressed to a minimum.

### (Mass Ratio of Specific Anion-Containing Compound (X) to Electrolyte)

When the nonaqueous electrolytic solution comprises the specific anion-containing compound (X), the mass ratio of the content of the specific anion-containing compound (X) (the total amount in the case of two or more kinds) to the content of the electrolyte (specific anion-containing compound (X) [g]/electrolyte [g]) is usually 0.00005 or more, preferably 0.001 or more, more preferably 0.01 or more, still more preferably 0.02 or more, and even more preferably 0.025 or more, and is usually 0.5 or less, preferably 0.45 or less, more preferably 0.4 or less, and still more preferably 0.35 or less. The mass ratio is usually 0.00005 or more and 0.5 or less, preferably 0.001 or more and 0.45 or less, more preferably 0.01 or more and 0.4 or less, still more preferably 0.02 or more and 0.35 or less, and even more preferably 0.025 or more and 0.35 or less.

When the mass ratio is within this range, it is possible to significantly suppress worsening of battery characteristics, in particular, the DCR retention rate after high-temperature storage, significantly suppress an increase in the gas generation amount after high-temperature storage, significantly improve the capacity retention rate after cycle charging and discharging, and significantly suppress electrode swelling and resistance after cycles. The principle of exhibiting this effect is not clear, but it is considered that a side reaction of the electrolyte in the battery system can be suppressed to a minimum by comprising the specific anion-containing compound (X) and the electrolyte in this mass ratio range.

### [1-4-2. Specific Carbonate Compound (Y)]

The nonaqueous electrolytic solution preferably comprises one or more carbonate compounds selected from the group consisting of a cyclic carbonate having a carbon-carbon unsaturated bond and a cyclic carbonate having a fluorine atom. Among these, the nonaqueous electrolytic solution preferably comprises a cyclic carbonate having a fluorine atom, and more preferably comprises monofluoroethylene carbonate. These may be used alone or in combination of two or more thereof in an arbitrary ratio, and it is preferable to combine an unsaturated cyclic carbonate and a fluorinated cyclic carbonate, it is more preferable to combine vinylene carbonate and a fluorinated cyclic carbonate and to combine an unsaturated cyclic carbonate and monofluoroethylene carbonate, and it is still more preferable to combine vinylene carbonate and monofluoroethylene carbonate.

### (Content of Specific Carbonate Compound (Y))

The content of the specific carbonate compound (Y) (the total amount in the case of two or more kinds) in the total amount of the nonaqueous electrolytic solution is usually 0.001% by mass or more, preferably 0.01% by mass or more, more preferably 0.1% by mass or more, and still more preferably 0.5% by mass or more, and is usually 10% by mass or less, preferably 5% by mass or less, more preferably 4% by mass or less, and still more preferably 3% by mass or less. Further, the content of the specific carbonate compound (Y) in the total amount of the nonaqueous electrolytic solution is usually 0.001% by mass or more and 10% by mass or less, preferably 0.01% by mass or more and 5% by mass or less, more preferably 0.1% by mass or more and 4% by mass and or less, and still more preferably 0.5% by mass or more and 3% by mass or less.

When the content of the specific carbonate compound (Y) is within the above range, battery characteristics, particularly a capacity retention rate after cycle charging and discharging, can be improved. Although the reason for this is not clear, it is considered that by comprising the carbonate compound in this ratio, a surface film is formed on an electrode, and a side reaction of a component of the nonaqueous electrolytic solution can be suppressed to a minimum.

Identification of the specific carbonate compound (Y) and measurement of the content thereof are performed by nuclear magnetic resonance (NMR) spectroscopy and/or gas chromatography.

### (Mass Ratio of Specific Carbonate Compound (Y) to Compound (A))

The mass ratio of the content of the specific carbonate compound (Y) (the total amount in the case of two or more kinds) to the content of the compound (A) (specific carbonate compound (Y) [g]/compound (A) [g]) is usually 0.01 or more, preferably 0.05 or more, more preferably 0.3 or more, and still more preferably 0.5 or more, and is usually 100 or less, preferably 10 or less, more preferably 5 or less, and still more preferably 4 or less. The mass ratio is usually 0.01 or more and 100 or less, preferably 0.05 or more and 10 or less, more preferably 0.3 or more and 5 or less, and still more preferably 0.5 or more and 4 or less.

When the mass ratio is within the above range, battery characteristics, particularly a capacity retention rate after cycle charging and discharging can be improved. The reason for this is not clear, but it is considered that when the specific carbonate compound (Y) is contained in the above mass ratio range, a surface film is formed on an electrode, and a side reaction of a component of the nonaqueous electrolytic solution can be suppressed to a minimum.

### (Mass Ratio of Specific Carbonate Compound (Y) to Electrolyte)

In the nonaqueous electrolytic solution, the mass ratio of the content of the specific carbonate compound (Y) (the total amount in the case of two or more kinds) to the content of the electrolyte (specific carbonate compound (Y) [g]/electrolyte [g]) is usually 0.00005 or more, preferably 0.001 or more, more preferably 0.01 or more, still more preferably 0.02 or more, and even more preferably 0.025 or more, and is usually 0.5 or less, preferably 0.45 or less, more preferably 0.4 or less, and still more preferably 0.35 or less. The mass ratio is usually 0.00005 or more and 0.5 or less, preferably 0.001 or more and 0.45 or less, more preferably 0.01 or more and 0.4 or less, still more preferably 0.02 or more and 0.35 or less, and even more preferably 0.025 or more and 0.35 or less.

When the mass ratio is within the above range, battery characteristics, particularly a capacity retention rate after cycle charging and discharging can be improved. The reason for this is not clear, but it is considered that when the carbonate compound and the electrolyte are contained in the above mass ratio range, a surface film is formed on an electrode, and a side reaction of the electrolyte in the battery system can be suppressed to a minimum.

### [1-4-2-1. Cyclic Carbonate Having Carbon-Carbon Unsaturated Bond]

The cyclic carbonate having a carbon-carbon unsaturated bond (hereinafter, also referred to as "unsaturated cyclic carbonate") is not particularly limited as long as it is a cyclic carbonate having a carbon-carbon double bond or a carbon-carbon triple bond. A cyclic carbonate having an aromatic ring is also included in the unsaturated cyclic carbonate.

Examples of the unsaturated cyclic carbonate include vinylene carbonates, ethylene carbonates substituted with a substituent having an aromatic ring, a carbon-carbon double bond, or a carbon-carbon triple bond, phenyl carbonates, vinyl carbonates, allyl carbonates, and catechol carbonates. Among these, vinylene carbonates and ethylene carbonates substituted with a substituent having an aromatic ring, a carbon-carbon double bond, or a carbon-carbon triple bond are preferable.

Examples of the vinylene carbonates include vinylene carbonate, methylvinylene carbonate, 4,5-dimethylvinylene carbonate, phenylvinylene carbonate, 4,5-diphenylvinylene carbonate, vinylvinylene carbonate, 4,5-divinylvinylene carbonate, allylvinylene carbonate, and 4,5-diallylvinylene carbonate.

Examples of the ethylene carbonates substituted with a substituent having an aromatic ring, a carbon-carbon double bond, or a carbon-carbon triple bond include vinylethylene carbonate, 4,5-divinylethylene carbonate, 4-methyl-5-vinylethylene carbonate, 4-allyl-5-vinylethylene carbonate, ethynylethylene carbonate, 4,5-diethynylethylene carbonate, 4-methyl-5-ethynylethylene carbonate, 4-vinyl-5-ethynylethylene carbonate, 4-allyl-5-ethynylethylene carbonate, phenylethylene carbonate, 4,5-diphenylethylene carbonate, 4-phenyl-5-vinylethylene carbonate, 4-allyl-5-phenylethylene carbonate, allylethylene carbonate, 4,5-diallylethylene carbonate, and 4-methyl-5-allylethylene carbonate.

Among these, vinylene carbonate, vinylethylene carbonate, and ethynylethylene carbonate are preferable because they form a more stable composite surface film on an electrode, one or more selected from vinylene carbonate and vinylethylene carbonate are more preferable, and vinylene carbonate is still more preferable.

The unsaturated cyclic carbonate may be used alone or in combination of two or more thereof in an arbitrary ratio.

### [1-4-2-2. Cyclic Carbonate Having Fluorine Atom]

The cyclic carbonate having a fluorine atom is not particularly limited as long as it has a cyclic carbonate structure and has a fluorine atom.

Examples of the cyclic carbonate having a fluorine atom include a fluorinated product of a cyclic carbonate having an alkylene group having 2 or more and 6 or less carbon atoms and a derivative thereof, and examples thereof include a fluorinated product of ethylene carbonate (fluoroethylene carbonate) and a derivative thereof, and ethylene carbonate having a fluorine-containing group. Examples of the derivative of the fluorinated product of ethylene carbonate include a fluorinated product of ethylene carbonate substituted with an alkyl group (for example, an alkyl group having 1 or more and 4 or less carbon atoms). Among these, fluoroethylene carbonate having 1 or more and 8 or less fluorine atoms and a derivative thereof are preferable.

Examples of the fluoroethylene carbonate having 1 or more and 8 or less fluorine atoms, the derivative thereof, and the ethylene carbonate having a fluorine-containing group include monofluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, and 4,4-difluoro-5,5-dimethylethylene carbonate.

Among these, one or more selected from monofluoroethylene carbonate, 4,4-difluoroethylene carbonate, and 4,5-difluoroethylene carbonate are preferable from the viewpoint of imparting high ion conductivity to the electrolytic solution and facilitating formation of a stable interface protective surface film.

The cyclic carbonate having a fluorine atom may be used alone or in combination of two or more thereof in an arbitrary ratio.

### <Second Aspect>

In the second aspect of the present invention, the nonaqueous electrolytic solution is a nonaqueous electrolytic solution comprising, in addition to the compound (A), at least one anion-containing compound selected from the group consisting of a phosphate anion-containing compound having a P-F bond and a P=O bond, an anion-containing compound having a S=O bond, and an oxalate complex anion-containing compound (hereinafter, also referred to as "specific anion-containing compound (X)" in the second aspect) in an amount of 0.001 % by mass or more and 5% by mass or less in the nonaqueous electrolytic solution.

In the second aspect, the specific anion-containing compound (X) may be used alone or in combination of two or more thereof in an arbitrary ratio.

The reason why the nonaqueous electrolytic solution of the second aspect exhibits an excellent effect of being capable of improving the recovery capacity retention rate by being used in a nonaqueous electrolytic solution battery is presumed by the present inventors as follows.

It is considered that, along with the charging and discharging of the nonaqueous electrolytic solution battery, the carbon-carbon unsaturated bond of the compound (A), preferably the carbon-carbon unsaturated bond contained in the aliphatic group reacts on the electrode to cause the compound (A) to be polymerized, and the polymerized compound (A) further reacts with the specific anion-containing compound (X) to form a poorly soluble and strong co-surface film containing a S=O bond and a structure derived from the specific anion-containing compound (X) on the electrode, thereby suppressing a side reaction between the electrode active material and the solvent or the like. The poorly soluble and strong co-surface film containing the S=O bond and the structure derived from the specific anion-containing compound (X) on the electrode can remarkably suppress a side reaction between the electrode active material and the solvent or the like as compared with a surface film formed of a polymer of a compound containing a carbon-carbon unsaturated bond but not containing a S=O bond and a surface film not containing a structure derived from the specific anion-containing compound (X). Therefore, in the nonaqueous electrolytic solution battery using the nonaqueous electrolytic solution of the second aspect, the recovery capacity retention rate can be improved.

### (Specific Anion-Containing Compound (X))

The specific anion-containing compound (X) is selected from a phosphate anion-containing compound having a P-F bond and a P=O bond, an anion-containing compound having a S=O bond, and an oxalate complex anion-containing compound. The specific anion-containing compound (X) may be used alone or in combination of two or more thereof in any combination and in an arbitrary ratio.

Among these, from the viewpoint of improving the recovery capacity retention rate, a phosphate anion-containing compound having a P-F bond and a P=O bond or an anion-containing compound having a S=O bond is preferable, and a difluorophosphate anion-containing compound or a fluorosulfonate anion-containing compound is more preferable.

In addition, from the viewpoint of suppressing the high-temperature storage gas generation amount, the specific anion-containing compound (X) is preferably a phosphate anion-containing compound having a P-F bond and a P=O bond or an oxalate complex anion-containing compound, and a difluorophosphate anion-containing compound or a boron oxalate complex anion-containing compound is more preferable. Furthermore, from the viewpoint of suppressing worsening of the DCR retention rate, the specific anion-containing compound (X) is still more preferably a phosphate anion-containing compound having a P-F bond and a P=O bond.

### (Phosphate Anion-Containing Compound Having P-F Bond and P=O Bond)

As the phosphate anion-containing compound having a P-F bond and a P=O bond in the second aspect, the compound shown in [1-4-1-1. Phosphate Anion-Containing Compound Having P-F Bond and P=O Bond] of the first aspect can be used, and preferred compounds are also as described in the first aspect.

### (Anion-Containing Compound Having S=O Bond)

As the anion-containing compound having a S=O bond in the second aspect, the compound shown in [1-4-1-2. Anion-Containing Compound Having S=O bond] of the first aspect can be used, and preferred compounds are also as described in the first aspect.

### (Oxalate Complex Anion-Containing Compound)

As the oxalate complex anion-containing compound in the second aspect, the compound shown in [1-4-1-3. Oxalate Complex Anion-Containing Compound] of the first aspect can be used, and preferred compounds are also as described in the first aspect.

### (Content of Specific Anion-Containing Compound (X))

The content of the specific anion-containing compound (X) (the total amount in the case of two or more kinds) in the total amount (100% by mass) of the nonaqueous electrolytic solution is usually 0.001% by mass or more, preferably 0.01% by mass or more, and more preferably 0.1% by mass or more, and is usually 5% by mass or less, preferably 4% by mass or less, and more preferably 3.5% by mass or less. In addition, the content of the specific anion-containing compound (X) is 0.001% by mass or more and 5% by mass or less, preferably 0.01% by mass or more and 4% by mass or less, and more preferably 0.1% by mass or more and 3.5% by mass or less, with respect to the total amount of the nonaqueous electrolytic solution.

When the specific anion-containing compound (X) is in this range, the battery characteristics, particularly the recovery capacity retention rate, can be significantly improved. The reason for this is not clear, but it is considered that when the content of the specific anion-containing compound (X) is within this range, a side reaction of a component of the nonaqueous electrolytic solution on the surface of an electrode can be suppressed to a minimum. Identification of the specific anion-containing compound (X) and measurement of the content thereof are performed by using nuclear magnetic resonance (NMR) spectroscopy and/or ion chromatography.

### (Mass Ratio of Specific Anion-Containing Compound (X) to Compound (A))

The mass ratio of the content of the specific anion-containing compound (X) (the total amount in the case of two or more kinds) to the content of the compound (A) (specific anion-containing compound (X) [g]/compound (A) [g]) is usually 0.01 or more, preferably 0.05 or more, and more preferably 0.3 or more, and is usually 100 or less, preferably 30 or less, more preferably 10 or less, more preferably 8 or less, and still more preferably 5.5 or less. The mass ratio is usually 0.01 or more and 100 or less, preferably 0.05 or more and 30 or less, more preferably 0.3 or more and 10 or less, more preferably 0.3 or more and 8 or less, and still more preferably 0.3 or more and 5.5 or less.

When the mass ratio is in this range, the battery characteristics, particularly the recovery capacity retention rate, can be significantly improved. Although the principle of this is not clear, it is considered that by comprising the compound (A) and the specific anion-containing compound (X) in this mass ratio range, a side reaction of a component of the nonaqueous electrolytic solution on an electrode can be suppressed to a minimum.

### (Mass Ratio of Specific Anion-Containing Compound (X) to Electrolyte)

In the second aspect, when the electrolyte in the nonaqueous electrolytic solution comprises LiPF₆, the mass ratio of the content of the specific anion-containing compound (X) (the total amount in the case of two or more kinds) to the content of LiPF₆ (specific anion-containing compound (X) [g]/LiPF₆ [g]) is usually 0.00005 or more, preferably 0.001 or more, more preferably 0.01 or more, still more preferably 0.02 or more, and even more preferably 0.025 or more, and is usually 0.5 or less, preferably 0.45 or less, more preferably 0.4 or less, and still more preferably 0.35 or less. The mass ratio is usually 0.00005 or more and 0.5 or less, preferably 0.001 or more and 0.45 or less, more preferably 0.01 or more and 0.4 or less, still more preferably 0.02 or more and 0.35 or less, and even more preferably 0.025 or more and 0.35 or less.

When the mass ratio is in this range, the battery characteristics, particularly the recovery capacity retention rate, can be significantly improved. The principle of exhibiting this effect is not clear, but it is considered that a side reaction of LiPF₆ in the battery system can be suppressed to a minimum by comprising the specific anion-containing compound (X) and LiPF₆ in this mass ratio range.

### (Electrolyte)

As the electrolyte in the second aspect, the same electrolyte as the electrolyte shown in [1-2. Electrolyte] of the first aspect can be used. Preferable types of electrolytes, concentrations in the nonaqueous electrolytic solution and the like are also the same.

### (Nonaqueous Solvent)

As the nonaqueous solvent in the second aspect, a known organic solvent can be used as in the case of the nonaqueous solvent shown in [1-3. Nonaqueous Solvent] of the first aspect.

The organic solvent may be used alone or in combination of two or more thereof in an arbitrary ratio.

The combination of two or more kinds of organic solvents is not particularly limited, and examples thereof include a combination of a saturated cyclic carbonate and a linear carboxylate, a combination of a cyclic carboxylate and a linear carbonate, and a combination of a saturated cyclic carbonate, a linear carbonate, and a linear carboxylate. Among these, a combination of a saturated cyclic carbonate and a linear carbonate and a combination of a saturated cyclic carbonate, a linear carbonate, and a linear carboxylate are preferable, a combination of a saturated cyclic carbonate, a linear carbonate, and methyl acetate or methyl propionate is more preferable, and a combination of a saturated cyclic carbonate, a linear carbonate, and methyl acetate is still more preferable.

In the second aspect, the linear carbonate is preferably one or more selected from dimethyl carbonate, diethyl carbonate, and ethyl methyl carbonate, and more preferably dimethyl carbonate or a combination of dimethyl carbonate and ethyl methyl carbonate.

In addition, the content of the linear carboxylate in the nonaqueous solvent in the second aspect is the same as the content in the first aspect, and when converted on a mass basis, the content is usually 0.8% by mass or more, preferably 4% by mass or more, and more preferably 13% by mass or more, and is usually 63% by mass or less, preferably 44% by mass or less, and more preferably 35% by mass or less. The content of the linear carboxylate in the nonaqueous solvent is usually 0.8% by mass or more and 63% by mass or less, preferably 4% by mass or more and 44% by mass or less, and more preferably 13% by mass or more and 35% by mass or less.

### (Auxiliary Agent)

As the auxiliary agent in the second aspect, except for the specific anion-containing compound (X), the auxiliary agent shown in [1-4. Auxiliary Agent] of the first aspect can be used. The content in the nonaqueous electrolytic solution and the like may be the same content.

### <Third Aspect>

A third aspect of the present invention is the nonaqueous electrolytic solution for a nonaqueous electrolytic solution battery having a negative electrode having a negative electrode active material comprising a metal element and/or a metalloid element capable of being alloyed with Li. Further, a third aspect of the present invention is a use of the nonaqueous electrolytic solution for a nonaqueous electrolytic solution battery having a negative electrode having a negative electrode active material comprising a metal element and/or a metalloid element capable of being alloyed with Li. Details of the negative electrode in the third aspect will be described later.

### (Nonaqueous Electrolytic Solution)

As the nonaqueous electrolytic solution in the third aspect, the same nonaqueous electrolytic solution as the nonaqueous electrolytic solution in the first aspect can be used.

The reason why the nonaqueous electrolytic solution of the third aspect exhibits excellent effects of improving the capacity retention rate after cycle charging and discharging and suppressing the electrode swelling and the resistance after cycles by being used in the nonaqueous electrolytic solution battery is presumed by the present inventors as follows.

Along with the charging and discharging of the nonaqueous electrolytic solution battery, the compound (A) containing a carbon-carbon unsaturated bond reacts on the surface of a metal element and/or a metalloid element capable of being alloyed with Li comprised in the negative electrode to form a protective surface film on the material comprising the element(s), and further sulfur atom is reduced to form an anionic surface film, which promotes Li conduction in the surface film and suppresses overvoltage during charging and discharging. Therefore, it is considered that deterioration of particles of the material comprising a metal element and/or a metalloid element capable of being alloyed with Li and a decomposition reaction of the electrolytic solution on the surface of the particles are suppressed. Therefore, in a nonaqueous electrolytic solution battery using the nonaqueous electrolytic solution of the third aspect, the capacity retention rate after cycle charging and discharging can be improved, and the electrode swelling and the resistance after cycles can be suppressed.

### <Fourth Aspect>

In the fourth aspect of the present invention, the nonaqueous electrolytic solution comprises, in addition to the compound (A), a linear carboxylate and one or more selected from the group consisting of cyclic carbonates having carbon-carbon unsaturated bonds, and fluorine atom-containing cyclic carbonates.

The present inventors presume as follows about the reason why the nonaqueous electrolytic solution of the fourth aspect exhibits an excellent effect of being able to suppress an increase in internal resistance by being used in a nonaqueous electrolytic solution battery in spite of comprising a carboxylate having a high reduction reactivity at a negative electrode.

It is considered that the compound (A) and the specific carbonate compound (Y) react with each other along with the charging and discharging of the nonaqueous electrolytic solution battery to form a surface film on the electrode, thereby suppressing side reactions between the electrode active material and the solvent or the like. In addition, it is considered that at that time, a product produced by the reaction of the linear carboxylate with the electrode further reacts with the surface film to form a strong co-surface film having a high polarity, and side reactions between the electrode active material and the solvent or the like can be more strongly suppressed. Therefore, in a nonaqueous electrolytic solution battery using the nonaqueous electrolytic solution of the fourth aspect, although the carboxylate having high reduction reactivity at the negative electrode is comprised as a nonaqueous medium, an increase in the internal resistance can be suppressed by using the nonaqueous electrolytic solution battery.

### (Cyclic Carbonate Having Carbon-Carbon Unsaturated Bond and Fluorine Atom-Containing Cyclic Carbonate)

As the cyclic carbonate having a carbon-carbon unsaturated bond and the fluorine atom-containing cyclic carbonate in the fourth aspect, that is, the specific carbonate compound (Y), the compound shown in [1-4-2. Specific Carbonate Compound (Y)] of the first aspect can be used, and the preferred compounds, the content in the nonaqueous electrolytic solution, and the like are also as described in the first aspect.

### (Linear Carboxylate)

As the linear carboxylate in the fourth aspect, the compound described in [1-3-3. linear Carboxylate] of the first aspect can be used.

The content of the linear carboxylate in the nonaqueous electrolytic solution is usually 1% by volume or more, preferably 5% by volume or more, and more preferably 15% by volume or more, and is usually 70% by volume or less, preferably 50% by volume or less, and more preferably 40% by volume or less, from the viewpoint of suppressing an increase in internal resistance. The content of the linear carboxylate is usually 1% by volume or more and 70% by volume or less, preferably 5% by volume or more and 50% by volume or less, and more preferably 15% by volume or more and 40% by volume or less.

When the content of the linear carboxylate with respect to the total amount of the nonaqueous solvent is converted on a mass basis, it is usually 0.8% by mass or more, preferably 4% by mass or more, and more preferably 13% by mass or more, and is usually 63% by mass or less, preferably 44% by mass or less, and more preferably 35% by mass or less. When the content of the linear carboxylate is converted on a mass basis, it is usually 0.8% by mass or more and 63% by mass or less, preferably 4% by mass or more and 44% by mass or less, and more preferably 13% by mass or more and 35% by mass or less.

### (Electrolyte)

As the electrolyte in the second aspect, the same electrolyte as the electrolyte shown in [1-2. Electrolyte] of the first aspect can be used. Preferable types of electrolytes, concentrations in the nonaqueous electrolytic solution and the like are also the same.

### (Nonaqueous Solvent)

As the nonaqueous solvent in the fourth aspect, it is possible to use the same nonaqueous solvent as the nonaqueous solvent shown in [1-3. Nonaqueous Solvent] of the first aspect except that the nonaqueous solvent comprises the linear carboxylate. However, as described above, the nonaqueous solvent in the fourth aspect comprises a linear carboxylate.

### (Auxiliary Agent)

As the auxiliary agent in the fourth aspect, the auxiliary agents shown in [1-4. Auxiliary Agent] in the first aspect can be used, except that the auxiliary agent comprises the fluorine atom-containing cyclic carbonate. The content in the nonaqueous electrolytic solution and the like may be the same content.

### [2. Nonaqueous Electrolytic Solution Battery]

The nonaqueous electrolytic solution battery of the present invention is a nonaqueous electrolytic solution battery comprising a positive electrode having a positive electrode active material capable of absorbing and releasing metal ions, and a negative electrode having a negative electrode active material capable of absorbing and releasing metal ions, and is characterized by comprising the nonaqueous electrolytic solution according to any one of the first to fourth aspects of the present invention.

Examples of the nonaqueous electrolytic solution battery of the present invention include a polyvalent cation battery, a metal-air secondary battery, and a secondary battery using s-block metals other than those described above. A nonaqueous electrolytic solution secondary battery is preferable, and a lithium ion secondary battery is more preferable.

### [2-1. Nonaqueous Electrolytic Solution]

As the nonaqueous electrolytic solution, the above-mentioned nonaqueous electrolytic solution is used. In addition, it is also possible to mix and use other nonaqueous electrolytic solution with the nonaqueous electrolytic solution of the present invention within a range not departing from the gist of the present invention.

### [2-2. Positive Electrode]

The positive electrode comprises a positive electrode active material capable of absorbing and releasing metal ions on at least a part of a surface of a collector. The positive electrode active material is preferably a positive electrode active material capable of absorbing and releasing lithium ions, and more preferably comprises a lithium transition metal-based compound.

### [2-2-1. Positive Electrode Active Material]

Hereinafter, the positive electrode active material (lithium transition metal-based compound) used in the positive electrode will be described.

### [2-2-1-1. Lithium Transition Metal-Based Compound]

The lithium transition metal-based compound is a compound having a structure capable of desorbing and inserting lithium ions, and examples thereof include a sulfide, a phosphate compound, a silicate compound, a borate compound, and a lithium transition metal composite oxide. Among these, a phosphate compound or a lithium transition metal composite oxide is preferable, and a lithium transition metal composite oxide is more preferable.

Examples of the lithium transition metal composite oxide include a spinel structure capable of three dimensional diffusion and a layered structure capable of two dimensional diffusion of lithium ions.

The lithium transition metal composite oxide having a spinel structure is generally represented by the following composition formula (1).

LiₓM₂O₄ (1)

(In the formula (1), x satisfies 1 ≤ x ≤ 1.5, and M represents one or more transition metal elements.)

Specific examples of the oxides represented by the formula (1) include LiMn₂O₄, LiCoMnO₄, LiNi_{0.5}Mn_{1.5}O₄, and LiCoVO₄.

The lithium transition metal composite oxide having a layered structure is generally represented by the following formula (2).

Li_{1+y1}MO₂ (2)

(In the formula (2), y satisfies -0.1 ≤ y1 ≤ 0.5, and M represents one or more transition metal elements.)

Specific examples of the oxide represented by the formula (2) include LiCoO₂, LiNiO₂, LiNi_{0.85}Co_{0.10}Al_{0.05}O₂, LiNi_{0.80}Co_{0.15}Al_{0.05}O₂, LiNi_{0.33}Co_{0.33}Mn_{0.33}O₂, Li_{1.05}Ni_{0.33}Co_{0.33}Mn_{0.33}O₂, LiNi_{0.5}Co_{0.2}Mn_{0.3}O₂, Li_{1.05}Ni_{0.5}Co_{0.2}Mn_{0.3}O₂, LiNi_{0.6}Co_{0.2}Mn_{0.2}O₂, LiNi_{0.8}Co_{0.1}Mn_{0.1}O₂, LiNi_{0.91}Co_{0.06}Mn_{0.03}O₂, LiNi_{0.91}Co_{0.06}Al_{0.03}O₂, LiNi_{0.90}Co_{0.03}Al_{0.07}O₂, and Li_{1.05}Ni_{0.34}Co_{0.33}Mn_{0.33}O₂.

Among these, from the viewpoint of improving battery capacity, a lithium transition metal composite oxide having a layered structure is preferable, and a lithium transition metal composite oxide represented by the following formula (3) is more preferable.

Liₐ₁Ni_{b1}M_{c1}O₂ (3)

(In the formula (3), al, b1, and c1 satisfy 0.90 ≤ a1 ≤ 1.10, 0.30 ≤ b1 ≤ 0.98, and 0 ≤ c1 ≤ 0.70, respectively, and b1 + c1 = 1. M represents at least one element selected from the group consisting of Co, Mn, Al, Mg, Zr, Fe, Ti, and Er.)

In the formula (3), b1 is preferably 0.40 or more, more preferably 0.50 or more, and particularly preferably 0.60 or more.

In particular, from the viewpoint of the structural stability of the lithium transition metal composite oxide, a lithium transition metal composite oxide represented by the following formula (4) is preferable.

Liₐ₂Ni_{b2}Co_{c2}M_{d2}O₂ (4)

(In the formula (4), a2, b2, c2, and d2 satisfy 0.90 ≤ a2 ≤ 1.10, 0.30 ≤ b2 ≤ 0.98, 0.01 ≤ c2 ≤ 0.70, and 0.01 ≤ d2 ≤ 0.50, respectively, and b2 +c2 + d2 = 1. M represents at least one element selected from the group consisting of Mn, Al, Mg, Zr, Fe, Ti, and Er.)

In the formula (4), b2 is preferably 0.40 or more, more preferably 0.50 or more, and particularly preferably 0.60 or more. In addition, d2 is preferably 0.01 or more, and more preferably 0.10 or more.

Suitable examples of the lithium transition metal composite oxide represented by the formula (4) include LiNi_{0.85}Co_{0.10}Al_{0.05}O₂, LiNi_{0.80}Co_{0.15}Al_{0.05}O₂, LiNi_{0.8}Co_{0.1}Mn_{0.1}O₂, LiNi_{0.91}Co_{0.06}Mn_{0.03}O₂, LiNi_{0.91}Co_{0.06}Al_{0.03}O₂, LiNi_{0.90}Co_{0.03}Al_{0.07}O₂, and Li_{1.05}Ni_{0.34}Co_{0.33}Mn_{0.33}O₂.

In the above formulas (1) to (3), from the viewpoint of improving the structural stability of the lithium transition metal composite oxide and suppressing structural deterioration during repeated charging and discharging, M preferably comprises Co, Mn, or Al, and more preferably comprises Co and Mn.

In the formula (4), from the viewpoint of improving the structural stability of the lithium transition metal composite oxide and suppressing structural deterioration during repeated charging and discharging, M preferably comprises Mn or Al, and more preferably comprises Mn.

### [2-2-1-2. Introduction of Foreign Element]

In addition, the lithium transition metal composite oxide may comprise an element (foreign element) other than the element included in any one of the composition formulas (1) to (4).

The positive electrode active material excluding the lithium transition metal-based compound is not particularly limited as long as it is a positive electrode active material capable of absorbing and releasing metal ions, and known positive electrode active materials can be used.

### [2-2-1-3. Surface Coating]

As the positive electrode, a positive electrode in which a material having a composition different from that of the positive electrode active material (surface adhered material) is adhered to the surface of the positive electrode active material may be used.

Examples of the surface adhered material include an oxide, such as aluminum oxide, a sulfate, such as lithium sulfate, and a carbonate, such as lithium carbonate. The surface adhered material can be adhered to the surface of the positive electrode active material by, for example, a method in which the material is dissolved or suspended in a solvent, impregnated into the positive electrode active material, and dried.

The amount of the surface adhered material is preferably 1 µmol/g or more, and more preferably 10 µmol/g or more, and is usually preferably 1 mmol/g or less, with respect to the positive electrode active material.

In the present specification, a material in which the above-mentioned surface adhered material is adhered to the surface of a positive electrode active material is also referred to as a "positive electrode active material".

### [2-2-1-4. Blend]

The positive electrode active material may be used alone or in combination of two or more thereof in an arbitrary ratio.

### [2-2-2. Configuration and Production Method of Positive Electrode]

A positive electrode using the positive electrode active material can be produced by an ordinary method. That is, the positive electrode can be obtained by a coating method in which a positive electrode active material and a binder, and if necessary, an electroconductive material, a thickener, and the like are mixed by a dry method and formed into a sheet, and the sheet is pressure-bonded to a positive electrode collector, or these materials are dissolved or dispersed in a liquid medium, such as an aqueous solvent or an organic solvent to form a slurry, and the slurry is applied onto a positive electrode collector and dried to form a positive electrode active material layer on the collector. Further, for example, the positive electrode active material may be formed into a sheet electrode by roll forming, or may be formed into a pellet electrode by compression molding.

Hereinafter, a case where the slurry is sequentially applied onto the positive electrode collector and dried will be described.

### [2-2-2-1. Content of Positive Electrode Active Material]

The content of the positive electrode active material in the positive electrode active material layer is usually 80% by mass or more and 99.5% by mass or less.

### [2-2-2-2. Electrode Density]

The positive electrode active material layer obtained by coating and drying is preferably compacted by a hand press, a roller press, or the like in order to increase the filling density of the positive electrode active material. The density of the positive electrode active material layer present on the collector is usually 1.5 g/cm³ or more and 4.5 g/cm³ or less.

### [2-2-2-3. Electroconductive Material]

As the electroconductive material, any known electroconductive material can be used. Specific examples thereof include a metal material, such as copper and nickel; graphite, such as natural graphite and artificial graphite; carbon black, such as acetylene black; and a carbon-based material, such as amorphous carbon, such as needle coke. The electroconductive material may be used alone or in combination of two or more thereof in an arbitrary ratio. The electroconductive material is usually used so as to be comprised in the positive electrode active material layer in an amount of 0.01% by mass or more and 50% by mass or less.

### [2-2-2-4. Binder]

In the case where the positive electrode active material layer is formed by a coating method, the type of the binder used for the production of the positive electrode active material layer is not particularly limited as long as the binder is a material that is dissolved or dispersed in a liquid medium for slurry. For example, in view of weather resistance, chemical resistance, heat resistance, flame retardancy, and the like, a fluorine-based resin, such as polyvinyl fluoride, polyvinylidene fluoride, and polytetrafluoroethylene; a CN group-containing polymer, such as polyacrylonitrile and polyvinylidene cyanide; and the like are preferable.

In addition, a mixture, a modified product, a derivative, a random copolymer, an alternating copolymer, a graft copolymer, a block copolymer, and the like of the above-described polymer and the like can also be used. The binder may be used alone or in combination of two or more thereof in an arbitrary ratio.

When a resin is used as the binder, the weight-average molecular weight of the resin is arbitrary as long as the effects of the present invention are not impaired, and is usually 10,000 or more and 3,000,000 or less. When the molecular weight is in this range, the strength of the electrode is improved, and the electrode can be suitably formed.

The content of the binder in the positive electrode active material layer is usually 0.1 % by mass or more and 80% by mass or less.

### [2-2-2-5. Collector]

The material of the positive electrode collector is not particularly limited, and any known material can be used. Specific examples thereof include a metal material, such as aluminum, stainless steel, nickel plating, titanium, and tantalum, and aluminum is preferable.

Examples of the shape of the collector include a metal foil, a metal cylinder, a metal coil, a metal plate, a metal thin film, an expanded metal, a punched metal, and a foamed metal. Among these, a metal foil or a metal thin film is preferable. Note that the metal thin film may be appropriately formed in a mesh shape.

In the case where the collector for the positive electrode has a plate shape, a film shape, or the like, the collector may have any desired thickness, but the thickness is usually 1 µm or more and 1 mm or less.

### [2-2-2-6. Thickness of Positive Electrode Plate]

The thickness of the positive electrode plate is not particularly limited, but from the viewpoint of high capacity and high output, the thickness of the positive electrode active material layer obtained by subtracting the thickness of the collector from the thickness of the positive electrode plate is usually 10 µm or more and 500 µm or less with respect to one surface of the collector.

### [2-2-2-7. Surface Coating of Positive Electrode Plate]

The positive electrode plate may have a surface to which a material having a composition different from that of the positive electrode plate is adhered. As the material, the same material as the surface adhered material that may be adhered to the surface of the positive electrode active material is used.

### [2-3. Negative Electrode]

The negative electrode has a negative electrode active material on at least a part of a collector surface.

### [2-3-1. Negative Electrode Active Material]

The negative electrode active material used for the negative electrode is not particularly limited as long as it is capable of electrochemically absorbing and releasing metal ions. Specific examples thereof include (i) a carbon-based material, (ii) particles comprising a metal element and/or a metalloid element capable of being alloyed with Li, (iii) a lithium-containing metal composite oxide material, and (iv) a mixture thereof. Among these, it is preferable to use (i) a carbon-based material, (ii) particles comprising a metal element and/or a metalloid element capable of being alloyed with Li, and (v) a mixture of particles comprising a metal element and/or a metalloid element capable of being alloyed with Li and graphite particles, from the viewpoint of good cycle properties and safety and excellent continuous charging properties.

These may be used alone or in combination of two or more thereof in an arbitrary ratio.

### [2-3-1-1. Carbon-Based Material]

Examples of the (i) carbon-based material include natural graphite, artificial graphite, amorphous carbon, carbon-coated graphite, graphite-coated graphite, and resin-coated graphite. Among these, natural graphite is preferable. The carbon-based material may be used alone or in combination of two or more thereof in an arbitrary ratio.

Examples of the natural graphite include scaly graphite, flaky graphite, and/or graphite particles obtained by subjecting these graphite to a treatment, such as spheroidization or densification. Among these, spherical or ellipsoidal graphite particles that have been subjected to a spheroidizing treatment are preferable from the viewpoint of particle packing properties or charging and discharging rate properties.

The volume-average particle diameter (d50) of the graphite particles is usually 1 µm or more and 100 µm or less.

### [2-3-1-2. Physical Properties of Carbon-Based Material]

The carbon-based material as the anode active material preferably satisfies at least one item, and more preferably satisfies a plurality of items at the same time, among characteristics, such as physical properties and shapes shown in the following (1) to (4).

### (1) X-ray Diffraction Parameter

The d value (interlayer spacing) of the lattice plane (002 plane) of a carbon-based material as determined by X-ray diffraction according to Gakushin-method is usually 0.335 nm or more and 0.360 nm or less. The crystallite size (Lc) of the carbon-based material as determined by X-ray diffraction according to Gakushin-method is 1.0 nm or more.

### (2) Volume-Based Average Particle Diameter

The volume-based average particle diameter of the carbon-based material is an average particle diameter (median diameter) on a volume basis obtained by a laser diffraction/scattering method, and is usually 1 µm) or more and 100 µm or less.

### (3) Raman R Value, Raman Full Width at Half Maximum

The Raman R value of the carbon-based material is a value measured using an argon ion laser Raman spectrum method, and is usually 0.01 or more and 1.5 or less.

The Raman full width at half maximum near 1580 cm⁻¹ of the carbon-based material is not particularly limited, but is usually 10 cm⁻¹ or more and 100 cm⁻¹ or less.

### (4) BET Specific Surface Area

The BET specific surface area of the carbon-based material is a value of a specific surface area measured using a BET method, and is usually 0.1 m²·g⁻¹ or more and 100 m²·g⁻¹ or less.

The negative electrode active material may comprise two or more kinds of carbon-based materials having different properties. The term "properties" as used herein refers to one or more characteristics selected from the group consisting of an X-ray diffraction parameter, a volume-based average particle diameter, a Raman R value, a Raman full width at half maximum, and a BET specific surface area.

Examples of comprising two or more kinds of carbon-based materials having different properties include a case where the volume-based particle size distribution is not symmetrical about the median diameter, a case where two or more kinds of carbon-based materials having different Raman R values are comprised, and a case where X-ray parameters are different.

### [2-3-1-3. Material Comprising Metal Element and/or Metalloid Element Capable of being Alloyed with Li]

As the (ii) material comprising a metal element and/or a metalloid element capable of being alloyed with Li, any conventionally known material can be used, but from the viewpoint of capacity and cycle life, for example, a metal or a metalloid selected from the group consisting of Sb, Si, Sn, Al, As, and Zn is preferable. When the material comprising a metal element and/or a metalloid element capable of being alloyed with Li comprises two or more kinds of metals, the material may be an alloy material made of an alloy of these metals.

Examples of the compound comprising a metal element and/or a metalloid element capable of being alloyed with Li include an oxide, a nitride, and a carbide of a metal and/or a metalloid. The compound may comprise two or more kinds of metal elements and/or metalloid elements capable of being alloyed with Li. Among these, metal Si (hereinafter, also referred to as "Si") or a Si-containing inorganic compound is preferable from the viewpoint of increasing the capacity. In the present specification, Si or a Si-containing inorganic compound is collectively referred to as Si compound.

In addition, the compound comprising a metal element and/or a metalloid element capable of being alloyed with Li may be already alloyed with Li at the time of the production of the negative electrode described later, and as the compound, a Si compound is preferable from the viewpoint of increasing the capacity.

Examples of the Si compound include SiOₓ₁ (0 ≤ x1 ≤ 2).

Examples of the metal compound alloyed with Li include Li_{z1}Si (0 < z1 ≤ 4.4) and Li_{2z2}SiO_{2+z2} (0 < z2 ≤ 2). As the Si compound, a Si oxide (SiOₓ₂, 0 < x2 ≤ 2) is preferable from the viewpoint of larger theoretical capacity as compared with graphite, and amorphous Si or nano-sized Si crystal is preferable from the viewpoint that alkali ions, such as lithium ions can easily go in and out and high capacity can be obtained.

When the material comprising a metal element and/or a metalloid element capable of being alloyed with Li is in the form of particles, the volume-average particle diameter (d50) of the particles is usually 0.01 µm or more and 10 µm or less from the viewpoint of cycle life.

### [2-3-1-4. Mixture of Material Comprising Metal Element and/or Metalloid Element Capable of being Alloyed with Li and Natural Graphite]

The (v) mixture of a material comprising a metal element and/or a metalloid element capable of being alloyed with Li and graphite particles may be a mixture in which the above-mentioned (ii) material comprising a metal element and/or a metalloid element capable of being alloyed with Li and the above-mentioned graphite particles are mixed in a state of particles independent from each other, or may be a composite in which particles comprising a metal element and/or a metalloid element capable of being alloyed with Li are present on the surface or inside of the graphite particles.

The content ratio of the particles comprising a metal element and/or a metalloid element capable of being alloyed with Li is usually 1% by mass or more and 99% by mass or less with respect to the total amount of the particles comprising a metal element and/or a metalloid element capable of being alloyed with Li and the graphite particles.

### [2-3-1-5. Lithium-Containing Metal Composite Oxide Material]

The (iii) lithium-containing metal composite oxide material is not particularly limited as long as it can absorb and release lithium ions. Specifically, from the viewpoint of high current density charging and discharging properties, a lithium-containing metal composite oxide material comprising titanium is preferable, a composite oxide of lithium and titanium (hereinafter, also referred to as a "lithium-titanium composite oxide") is more preferable, and a lithium-titanium composite oxide having a spinel structure is still more preferable since the output resistance is significantly reduced.

In addition, lithium and/or titanium of the lithium-titanium composite oxide may be substituted with another metal element, for example, at least one element selected from the group consisting of Al, Ga, Cu, and Zn.

As the lithium-titanium composite oxide, Li_{4/3}Ti_{5/3}O₄, Li₁Ti₂O₄, and Li_{4/5}Ti_{11/5}O₄ are preferable. In addition, for example, Li_{4/3}Ti_{4/3}Al_{1/3}O₄ is also preferable as the lithium-titanium composite oxide in which a part of lithium and/or titanium is substituted with other elements.

### [2-3-2. Configuration and Production Method of Negative Electrode]

The negative electrode may be produced by any known method as long as the effects of the present invention are not impaired. For example, the negative electrode can be fabricated by adding a binder, a liquid medium, such as an aqueous solvent and an organic solvent, and if necessary, a thickener, an electroconductive material, a filler, and the like to a negative electrode active material to form a slurry, applying the slurry onto a collector, drying the slurry, and then pressing the dried slurry to form a negative electrode active material layer.

### [2-3-2-1. Content of Negative Electrode Active Material]

The content of the negative electrode active material in the negative electrode active material layer is usually 80% by mass or more and 99.5% by mass or less.

### [2-3-2-2. Electrode Density]

The negative electrode active material layer obtained by coating and drying is preferably compacted by a hand press, a roller press, or the like in order to increase the filling density of the negative electrode active material.

When the negative electrode active material is formed into an electrode, the structure of the electrode is not particularly limited, but the density of the negative electrode active material layer present on the collector is usually 1 g/cm³ or more and 2.2 g/cm³ or less.

### [2-3-2-3. Thickener]

The thickener is usually used for adjusting the viscosity of the slurry. The thickener is not particularly limited, and specific examples thereof include carboxymethyl cellulose and a salt thereof, methyl cellulose, hydroxymethyl cellulose, ethyl cellulose, and polyvinyl alcohol. These may be used alone or in combination of two or more thereof in an arbitrary ratio.

When a thickener is used, the content of the thickener with respect to the negative electrode active material is usually 0.1% by mass or more and 5% by mass or less.

### [2-3-2-4. Binder]

The binder for binding the negative electrode active material is not particularly limited as long as it is a material stable to a nonaqueous electrolytic solution and a liquid medium used in the production of an electrode.

Specific examples thereof include a rubber-like polymer, such as styrene-butadiene rubber (SBR), isoprene rubber, butadiene rubber, fluororubber, acrylonitrile-butadiene rubber (NBR), and ethylene-propylene rubber; and a fluorine-based polymer, such as polyvinylidene fluoride, polytetrafluoroethylene, fluorinated polyvinylidene fluoride, and a tetrafluoroethylene-ethylene copolymer. These may be used alone or in combination of two or more thereof in an arbitrary ratio.

The content of the binder with respect to the negative electrode active material is usually 0.1% by mass or more and 20% by mass or less.

In particular, when the binder comprises a rubber-like polymer represented by SBR as a main component, the content of the binder with respect to the negative electrode active material is usually 0.1% by mass or more and 5% by mass or less. In addition, when the binder comprises a fluorine-based polymer represented by polyvinylidene fluoride as a main component, the content of the binder with respect to the negative electrode active material is usually 1% by mass or more and 15% by mass or less.

### [2-3-2-5. Collector]

As the collector for holding the negative electrode active material, any known collector can be used. Examples of the collector for the negative electrode include a metal material, such as aluminum, copper, nickel, stainless steel, and nickel-plated steel, and copper is particularly preferable from the viewpoint of ease of processing and cost.

Examples of the shape of the collector for the negative electrode include a metal foil, a metal cylinder, a metal coil, a metal plate, a metal thin film, an expanded metal, a punched metal, and a foamed metal. Among these, a metal foil or a metal thin film is preferable. Note that the metal thin film may be appropriately formed in a mesh shape.

In the case where the collector for the negative electrode has a plate shape, a film shape, or the like, the collector may have any desired thickness, but the thickness is usually 1 µm or more and 1 mm or less.

### [2-3-2-6. Thickness of Negative Electrode Plate]

The thickness of the negative electrode (negative electrode plate) is designed in accordance with the positive electrode (positive electrode plate) to be used, and is not particularly limited. The thickness of the negative electrode active material layer obtained by subtracting the thickness of the collector from the thickness of the negative electrode material is usually 15 µm or more and 300 µm or less.

### [2-3-2-7. Surface Coating of Negative Electrode Plate]

The above-mentioned negative electrode plate may have a surface to which a material having a composition different from that of the negative electrode active material is adhered (surface adhered material). Examples of the surface adhered material include an oxide, such as aluminum oxide, a sulfate, such as lithium sulfate, and a carbonate, such as lithium carbonate.

### [2-4. Separator]

A separator is usually interposed between the positive electrode and the negative electrode in order to prevent a short circuit. In this case, the nonaqueous electrolytic solution is usually used by being impregnated into the separator.

The material and shape of the separator are not particularly limited, and any known material and shape can be employed as long as the effects of the present invention are not impaired.

### [2-5. Battery Design]

### [2-5-1. Electrode Group]

The electrode group may have either a laminate structure in which the positive electrode plate and the negative electrode plate are laminated with the separator interposed therebetween, or a structure in which the positive electrode plate and the negative electrode plate are spirally wound with the separator interposed therebetween. The ratio of the volume of the electrode group to the internal volume of the battery (electrode group occupancy) is usually 40% or more and 90% or less.

### [2-5-2. Collecting Structure]

When the electrode group has the above-described laminate structure, a structure formed by bundling metal core portions of the respective electrode layers and welding the bundled metal core portions to a terminal is suitably used. A structure in which a plurality of terminals are provided in an electrode to reduce resistance is also suitably used. When the electrode group has the above-described wound structure, the internal resistance can be reduced by providing a plurality of lead structures for each of the positive electrode and the negative electrode and bundling the lead structures to the terminal.

### [2-5-3. Protection Element]

As the protection element, a PTC (Positive Temperature Coefficient) element whose resistance increases with heat generation due to an excessive current or the like, a temperature fuse, a thermistor, a valve (current cutoff valve) that cuts off a current flowing through a circuit due to a rapid increase in internal pressure or internal temperature of the battery at the time of abnormal heat generation, or the like can be used. As the protection element, a protection element having a condition that does not operate in normal use at a high current is preferably selected, and a design that does not lead to abnormal heat generation or thermal runaway even without the protection element is more preferable.

### [2-5-4. Outer Packaging Body]

Nonaqueous electrolytic solution batteries are usually configured by housing the nonaqueous electrolytic solution of the present invention, a negative electrode, a positive electrode, separators, and the like in an outer packaging body (outer packaging case). The outer packaging body is not limited, and any known outer packaging body can be adopted as long as the effects of the present invention are not impaired.

The material of the outer packaging case is not particularly limited as long as it is stable to the nonaqueous electrolytic solution to be used, but from the viewpoint of weight reduction and cost, a metal, such as steel, aluminum, and an aluminum alloy, or a laminated film is preferably used. In particular, steel is preferable from the viewpoint of pressure resistance for operating the current interruption valve.

Examples of the outer packaging case using the above-mentioned metals include an outer packaging case having a sealed structure in which metals are welded to each other by laser welding, resistance welding, or ultrasonic welding, and an outer packaging case having a caulking structure in which the above-mentioned metals are used via a resin gasket.

### [2-5-5. Shape]

In addition, the shape of the outer packaging case is also arbitrary, and may be, for example, any of a cylinder-type shape, a prismatic shape, a laminate-type shape, a coin-type shape, and a large-sized shape.

### <First Aspect>

A nonaqueous electrolytic solution battery according to a first aspect of the present invention is characterized in that an electrolytic solution constituting the battery comprises the compound (A) represented by the above formula (1), and the positive electrode active material is a lithium transition metal-based compound (B) shown below. Accordingly, in the first aspect of the present invention, the nonaqueous electrolytic solution battery has the configuration described above except that the positive electrode active material is the following lithium transition metal-based compound (B). Further, in the nonaqueous electrolytic solution battery of the first aspect of the present invention, a negative electrode active material described in the following third aspect can also be used as the negative electrode active material.

The lithium transition metal-based compound in the first aspect will be described below.

### (Lithium Transition Metal-Based Compound (B))

The lithium transition metal-based compound (B) is a compound having a layered structure capable of desorbing and inserting lithium ions, and is represented by the following composition formula (5).

Li_{1+y2}MO₂ (5)

In the composition formula (1), y2 satisfies -0.1 ≤ y2 ≤ 0.5, M is a transition metal element comprising at least Ni, and a molar ratio (Ni/M) of a content of Ni to a content of all elements comprised in M is 0.40 or more, preferably 0.50 or more, and more preferably 0.55 or more, and is 1.0 or less, preferably 0.90 or less, and more preferably 0.80 or less. When the molar ratio is within this range, the compound (A) easily forms a surface film on the positive electrode, and a side reaction between the positive electrode and the nonaqueous electrolytic solution is suppressed, whereby the DCR retention rate of the nonaqueous electrolytic solution battery after high-temperature storage can be improved, and an increase in the gas generation amount after high-temperature storage can be suppressed.

Specific examples of the oxide represented by the composition formula (5) include LiNiO₂, LiNi_{0.85}Co_{0.10}Al_{0.05}O₂, LiNi_{0.80}Co_{0.15}Al_{0.05}O₂, LiNi_{0.5}Co_{0.2}Mn_{0.3}O₂, Li_{1.05}Ni_{0.5}Co_{0.2}Mn_{0.3}O₂, LiNi_{0.6}Co_{0.2}Mn_{0.2}O₂, LiNi_{0.8}Co_{0.1}Mn_{0.1}O₂, LiNi_{0.91}Co_{0.06}Mn_{0.03}O₂, LiNi_{0.91}Co_{0.06}Al_{0.03}O₂, LiNi_{0.90}Co_{0.03}Al_{0.07}O₂, and Li_{1.00}Ni_{0.61}Co_{0.20}Mn_{0.19}O₂.

Among these, from the viewpoint of improving battery capacity, a lithium transition metal composite oxide represented by the following composition formula (6) is more preferable.

Liₛ₁Niₜ₁Mᵤ₁O₂ (6)

In the composition formula (6), s1, t1, and u1 satisfy 0.90 ≤ s1 ≤ 1.10, 0.40 ≤ t1 ≤ 0.98, and 0.02 ≤ u1 ≤ 0.60, respectively, and t1 + u1 = 1. M represents at least one element selected from the group consisting of Co, Mn, Al, Mg, Zr, Fe, Ti, and Er.

In the composition formula (6), t1 is preferably 0.50 or more, and more preferably 0.60 or more.

In particular, from the viewpoint of the structural stability of the lithium transition metal composite oxide, a lithium transition metal composite oxide represented by the following composition formula (7) is preferable.

Liₛ₂Niₜ₂Coᵤ₂Mᵥ₂O₂ (7)

In the composition formula (7), s2, t2, u2, and v2 satisfy 0.90 ≤ s2 ≤ 1.10, 0.40 ≤ t2 ≤ 0.98, 0.01 ≤ u2 ≤ 0.60, and 0.01 ≤ v2 ≤ 0.60, respectively, and t2 + u2 + v2 = 1. M represents at least one element selected from the group consisting of Mn, Al, Mg, Zr, Fe, Ti, and Er.

In the composition formula (7), t2 is preferably 0.50 or more, and more preferably 0.60 or more. In addition, u2 is preferably 0.01 or more, and more preferably 0.10 or more.

Suitable examples of the lithium transition metal composite oxide represented by the composition formula (7) include LiNi_{0.85}Co_{0.10}Al_{0.05}O₂, LiNi_{0.80}Co_{0.15}Al_{0.05}O₂, LiNi_{0.8}Co_{0.1}Mn_{0.1}O₂, LiNi_{0.91}Co_{0.06}Mn_{0.03}O₂, LiNi_{0.91}Co_{0.06}Al_{0.03}O₂, LiNi_{0.90}Co_{0.03}Al_{0.07}O₂, and Li_{1.00}Ni_{0.61}Co_{0.20}Mn_{0.19}O₂.

In the above composition formula (5) or (6), M preferably comprises Mn or Al from the viewpoint of improving the structural stability of the lithium transition metal composite oxide and suppressing structural deterioration during repeated charging and discharging.

In the above composition formula (7), M preferably comprises Mn or Al, and more preferably comprises Mn from the viewpoint of improving the structural stability of the lithium transition metal composite oxide and suppressing structural deterioration during repeated charging and discharging.

### <Second Aspect>

A second aspect of the present invention is characterized in that the electrolytic solution constituting the battery comprises the compound (A) represented by the above formula (1) and further comprises the specific anion-containing compound (X) in a specific ratio in the electrolytic solution, and other than that, has the above-described configuration. Accordingly, in the second aspect of the present invention, in the nonaqueous electrolytic solution battery, the positive electrode active material described in the first aspect can be used as the positive electrode active material, and the negative electrode active material described in the following third aspect can be used as the negative electrode active material.

### <Third Aspect>

A third aspect of the present invention is characterized in that the electrolytic solution constituting the battery comprises the compound (A) represented by the above formula (1) and comprises a negative electrode having a negative electrode active material comprising a metal element and/or a metalloid element capable of being alloyed with Li. Accordingly, in the third aspect of the present invention, the nonaqueous electrolytic solution battery has the configuration described above except that the negative electrode active material is a negative electrode active material comprising a material comprising a metal element and/or a metalloid element capable of being alloyed with Li. In addition, in the nonaqueous electrolytic solution battery of the third aspect of the present invention, the positive electrode active material described in the first aspect can also be used as the positive electrode active material.

### (Material Comprising Metal Element and/or Metalloid Element Capable of being Alloyed with Li)

As the material comprising a metal element and/or a metalloid element capable of being alloyed with Li in the third aspect, a material similar to the material described in [2-3-1-3. Material Comprising Metal Element and/or Metalloid Element Capable of being Alloyed with Li] above can be used.

The content ratio of the material comprising a metal element and/or a metalloid element capable of being alloyed with Li with respect to the negative electrode active material is usually 1% by mass or more and 99% by mass or less. The content ratio is preferably 1% by mass or more, more preferably 2% by mass or more, still more preferably 3% by mass or more, and particularly preferably 5% by mass or more. On the other hand, the content ratio is usually 99% by mass or less, preferably 50% by mass or less, more preferably 40% by mass or less, still more preferably 30% by mass or less, even more preferably 25% by mass or less, yet still more preferably 20% by mass or less, and particularly preferably 15% by mass or less.

### (Other Negative Electrode Active Material)

The other negative electrode active material is not particularly limited as long as it can electrochemically absorb and release metal ions. Specific examples thereof include a carbon-based material, a lithium-containing metal composite oxide material, and a mixture thereof. Among these, it is preferable to use a carbon-based material in view of good cycle properties and safety and excellent continuous charging properties. These may be used alone, or two or more thereof may be used in any combination.

### (Carbon-Based Material)

Examples of the carbon-based material include natural graphite, artificial graphite, amorphous carbon, carbon-coated graphite, graphite-coated graphite, and resin-coated graphite. Among these, natural graphite is preferable. The carbon-based material may be used alone or in combination of two or more thereof in any combination and in an arbitrary ratio.

Examples of the natural graphite include scaly graphite, flaky graphite, and/or graphite particles obtained by subjecting these graphite to a treatment, such as spheroidization or densification. Among these, spherical or ellipsoidal graphite particles that have been subjected to a spheroidizing treatment are particularly preferable from the viewpoint of particle packing properties or charging and discharging rate properties.

The volume-average particle diameter (d50) of the carbon-based material is usually 1 µm or more and 100 µm or less.

The carbon-based material and graphite particle as the anode active material preferably satisfies at least one, and particularly preferably satisfies two or more at the same time, among characteristics, such as physical properties and shapes shown in the following (1) to (4).

### (1) X-ray Diffraction Parameter

The d value (interlayer spacing) of the lattice plane (002 plane) of a carbon-based material as determined by X-ray diffraction according to Gakushin-method is usually 0.335 nm or more and 0.360 nm or less. The crystallite size (Lc) of the carbon-based material as determined by X-ray diffraction according to Gakushin-method is usually 1.0 nm or more.

### (2) Volume-Based Average Particle Diameter

The volume-based average particle diameter of the carbon-based material is an average particle diameter (median diameter) on a volume basis obtained by a laser dififraction/scattering method, and is usually 1 µm or more and 100 µm or less.

### (3) Raman R Value, Raman Full Width at Half Maximum

The Raman R value of the carbon-based material is a value measured using an argon ion laser Raman spectrum method, and is usually 0.01 or more and 1.5 or less.

The Raman full width at half maximum near 1580 cm⁻¹ of the carbon-based material is not particularly limited, but is usually 10 cm⁻¹ or more and 100 cm⁻¹ or less.

### (4) BET Specific Surface Area

The BET specific surface area of the carbon-based material is a value of a specific surface area measured using a BET method, and is usually 0.1 m²·g⁻¹ or more and 100 m²·g⁻¹ or less.

The negative electrode active material may comprise two or more kinds of carbon-based materials having different properties. The term "properties" as used herein means an X-ray diffraction parameter, a volume-based average particle diameter, a Raman R value, a Raman full width at half maximum, and a BET specific surface area.

Preferred examples include a case where the volume-based particle size distribution is not symmetrical about the median diameter, a case where two or more kinds of carbon-based materials having different Raman R values are comprised, and a case where two or more kinds of carbon-based materials having different X-ray parameters are comprised.

### (Mixture of Particles of Material Comprising Metal Element and/or Metalloid Element Capable of being Alloyed with Li and Graphite Particles)

The mixture of the particles of the material comprising a metal element and/or a metalloid element capable of being alloyed with Li and the graphite particles used as the negative electrode active material may be a mixture in which the above-mentioned particles of the material comprising a metal element and/or a metalloid element capable of being alloyed with Li and the graphite particles described below are mixed in a state of particles of materials independent from each other, or may be a composite in which the particles of the material comprising a metal element and/or a metalloid element capable of being alloyed with Li are present on the surface or inside of the graphite particles.

The content ratio of the particles of the material comprising a metal element and/or a metalloid element capable of being alloyed with Li is usually 1% by mass or more and 99% by mass or less with respect to the total amount of the particles of the material comprising a metal element and/or a metalloid element capable of being alloyed with Li and the graphite particles. The content ratio is preferably 1% by mass or more, more preferably 2% by mass or more, still more preferably 3% by mass or more, and particularly preferably 5% by mass or more. On the other hand, the content ratio is usually 99% by mass or less, preferably 50% by mass or less, more preferably 40% by mass or less, still more preferably 30% by mass or less, even more preferably 25% by mass or less, yet still more preferably 20% by mass or less, and particularly preferably 15% by mass or less.

### <Fourth Aspect>

In a fourth aspect of the present invention, in the nonaqueous electrolytic solution battery, the positive electrode active material described in the first aspect can be used as the positive electrode active material, and the negative electrode active material described in the third aspect can be used as the negative electrode active material.

The present invention includes the following aspects of <1-1> to <111-23>.

<I-1> A nonaqueous electrolytic solution for a nonaqueous electrolytic solution battery, having a positive electrode comprising, as a positive electrode active material, a lithium transition metal-based compound (B) represented by the following composition formula (1):

   Li_{1+y2}MO₂ (5)

   wherein y2 is -0.1 or more and 0.5 or less, M is a transition metal element comprising at least Ni, and a molar ratio (Ni/M) of a content of Ni to a content of all elements comprised in M is 0.40 or more and 1.0 or less;
   wherein the nonaqueous electrolytic solution comprises a compound (A) represented by formula (1): 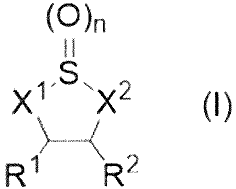 wherein X¹ and X² are each independently an oxygen atom or CH₂, R¹ and R² are each independently a hydrogen atom, a halogen atom, or a hydrocarbon group, and n is 1 or 2, provided that either one of R¹ and R² is a hydrocarbon group containing at least one carbon-carbon unsaturated bond, and when n is 2, at least one of X¹ and X² is CH₂.
<I-2> The nonaqueous electrolytic solution according to <1-1>, wherein the compound (A) is a compound represented by the following formula (II): 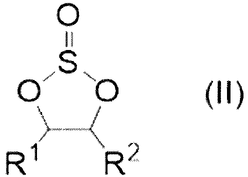 wherein R¹ and R² are the same as R¹ and R² in the formula (I).
<I-3> The nonaqueous electrolytic solution according to <1-1> or <1-2>, wherein R¹ and R² are each independently one selected from a hydrogen atom, a halogen atom, a vinyl group, and an allyl group, and either one of R¹ and R² is selected from a vinyl group and an allyl group.
<I-4> The nonaqueous electrolytic solution according to any one of <1-1> to <I-3>, further comprising 0.001% by mass or more and 5% by mass or less of one or more anion-containing compounds selected from the group consisting of a phosphate anion-containing compound having a P-F bond and a P=O bond, an anion-containing compound having a S=O bond, and an oxalate complex anion-containing compound, in the nonaqueous electrolytic solution.
<1-5> The nonaqueous electrolytic solution according to any one of <I-1> to <1-4>, wherein the nonaqueous electrolytic solution comprises 0.01% by mass or more and 10% by mass or less of the compound (A).
<I-6> The nonaqueous electrolytic solution for a battery according to any one of <1-1> to <1-5>, wherein the nonaqueous electrolytic solution further comprises one or more selected from the group consisting of a cyclic carbonate having a carbon-carbon unsaturated bond and a fluorine-atom-containing cyclic carbonate.
<I-7> The nonaqueous electrolytic solution for a battery according to any one of <1-1> to <1-6>, wherein the nonaqueous electrolytic solution further comprises a linear carboxylate.
<I-8> A nonaqueous electrolytic solution battery comprising: a nonaqueous electrolytic solution; a positive electrode having a positive electrode active material capable of absorbing and releasing a metal ion; and a negative electrode having a negative electrode active material capable of absorbing and releasing a metal ion, wherein the nonaqueous electrolytic solution comprises a compound (A) represented by formula (1), and the positive electrode active material comprises a lithium transition metal-based compound (B) represented by the following composition formula (5): 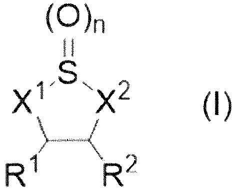 wherein X¹ and X² are each independently an oxygen atom or CH₂, R¹ and R² are each independently a hydrogen atom, a halogen atom, or a hydrocarbon group, and n is 1 or 2, provided that either one of R¹ and R² is a hydrocarbon group containing at least one carbon-carbon double bond, and when n is 2, at least one of X¹ and X² is CH₂;

   Li_{1+y2}MO₂ (5)

   wherein y2 is -0.1 or more and 0.5 or less, M is a transition metal element comprising at least Ni, and a molar ratio (Ni/M) of a content of Ni to a content of all elements comprised in M is 0.40 or more and 1.0 or less.
<I-9> The nonaqueous electrolytic solution battery according to <1-8>, wherein the compound (A) is a compound represented by the following formula (II): 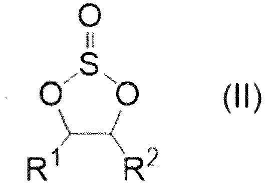 wherein R¹ and R² are the same as R¹ and R² in the formula (I).
<I-10> The nonaqueous electrolytic solution battery according to <1-8> or <1-9>, wherein R¹ and R² are each independently one selected from a hydrogen atom, a halogen atom, a vinyl group, and an allyl group, and either one of R¹ and R² is selected from a vinyl group and an allyl group.
<I-11> The nonaqueous electrolytic solution battery according to any one of <1-8> to <1-10>, further comprising one or more compounds selected from the group consisting of a phosphate anion-containing compound having a P-F bond and a P=O bond, an anion-containing compound having a S=O bond, and an oxalate complex anion-containing compound.
<I-12> The nonaqueous electrolytic solution battery according to any one of <1-8> to I-11>, wherein the nonaqueous electrolytic solution comprises 0.01% by mass or more and 10% by mass or less of the compound (A).
<1-13> The nonaqueous electrolytic solution battery according to any one of <1-8> to <1-12>, wherein the nonaqueous electrolytic solution further comprises one or more selected from the group consisting of a cyclic carbonate having a carbon-carbon unsaturated bond and a fluorine-atom-containing cyclic carbonate.
<1-14> The nonaqueous electrolytic solution battery battery according to any one of <1-8> to <1-13>, wherein the nonaqueous electrolytic solution further comprises a linear carboxylate.
<I-15> A use of a nonaqueous electrolytic solution for a nonaqueous electrolytic solution battery comprising a positive electrode having a positive electrode active material capable of absorbing and releasing a metal ion; and a negative electrode having a negative electrode active material capable of absorbing and releasing a metal ion, wherein the nonaqueous electrolytic solution comprises a compound (A) represented by formula (1), and the positive electrode active material comprises a lithium transition metal-based compound (B) represented by the following composition formula (1): 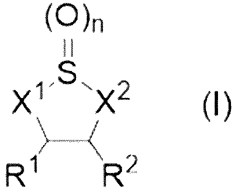 wherein X¹ and X² are each independently an oxygen atom or CH₂, R¹ and R² are each independently a hydrogen atom, a halogen atom, or a hydrocarbon group, and n is 1 or 2, provided that either one of R¹ and R² is a hydrocarbon group containing at least one carbon-carbon double bond, and when n is 2, at least one of X¹ and X² is CH₂;

   Li_{1+y2}MO₂ (5)

   wherein y2 is -0.1 or more and 0.5 or less, M is a transition metal element comprising at least Ni, and a molar ratio (Ni/M) of a content of Ni to a content of all elements comprised in M is 0.40 or more and 1.0 or less.
<1-16> The use according to <1-15>, wherein the compound (A) is a compound represented by the following formula (II): 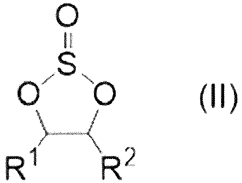 wherein R¹ and R² are the same as R¹ and R² in the formula (I).
<1-17> The use according to <1-15> or <1-16>, wherein R¹ and R² are each independently one selected from a hydrogen atom, a halogen atom, a vinyl group, and an allyl group, and either one of R¹ and R² is selected from a vinyl group and an allyl group.
<I-18> The use according to any one of <1-15> to <1-17>, wherein the nonaqueous electrolytic solution further comprises 0.001% by mass or more and 5% by mass or less of one or more compounds selected from the group consisting of a phosphate anion-containing compound having a P-F bond and a P=O bond, an anion-containing compound having a S=O bond, and an oxalate complex anion-containing compound.
<I-19> The use according to any one of <1-15> to <1-18>, wherein the nonaqueous electrolytic solution comprises 0.01% by mass or more and 10% by mass or less of the compound (A).
<1-20> The use according to any one of <1-15> to <1-19>, wherein the nonaqueous electrolytic solution further comprises one or more selected from the group consisting of a cyclic carbonate having a carbon-carbon unsaturated bond and a fluorine-atom-containing cyclic carbonate.
<1-21> The use according to any one of <1-15> to <1-20>, wherein the nonaqueous electrolytic solution further comprises a linear carboxylate.
<11-1> A nonaqueous electrolytic solution comprising: a compound (A) represented by formula (1); and one or more anion-containing compounds selected from the group consisting of a phosphate anion-containing compound having a P-F bond and a P=O bond, an anion-containing compound having a S=O bond, and an oxalate complex anion-containing compound, wherein a content of the anion-containing compound is 0.001% by mass or more and 5% by mass or less in the electrolytic solution: 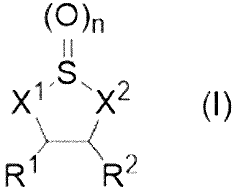 wherein X¹ and X² are each independently an oxygen atom or CH₂, R¹ and R² are each independently a hydrogen atom, a halogen atom, or a hydrocarbon group, and n is 1 or 2, provided that either one of R¹ and R² is a hydrocarbon group containing at least one carbon-carbon unsaturated bond, and when n is 2, at least one of X¹ and X² is CH₂.
<11-2> The nonaqueous electrolytic solution according to <11-1>, wherein the compound (A) is a compound represented by the following formula (II): 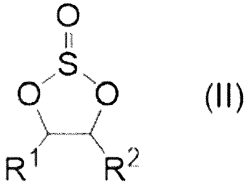 wherein R¹ and R² are the same as R¹ and R² in the formula (I).
<11-3> The nonaqueous electrolytic solution according to <11-1> or <11-2>, wherein R¹ and R² are each independently one selected from a hydrogen atom, a halogen atom, a vinyl group, and an allyl group, and either one of R¹ and R² is selected from a vinyl group and an allyl group.
<II-4> The nonaqueous electrolytic solution according to any one of <11-1> to <11-3>, wherein the nonaqueous electrolytic solution comprises 0.01% by mass or more and 10% by mass or less of the compound (A).
<11-5> The nonaqueous electrolytic solution for a battery according to any one of <11-1> to <11-4>, wherein the nonaqueous electrolytic solution further comprises one or more selected from the group consisting of a cyclic carbonate having a carbon-carbon unsaturated bond and a fluorine-atom-containing cyclic carbonate.
<II-6> The nonaqueous electrolytic solution according to any one of <II-1> to <11-5>, wherein the nonaqueous electrolytic solution further comprises a linear carboxylate.
<II-7> The nonaqueous electrolytic solution according to <II-6>, wherein the linear carboxylate is methyl acetate or methyl propionate.
<II-8> The nonaqueous electrolytic solution according to <11-6> or <11-7>, wherein a content of the linear carboxylate in the nonaqueous solvent is 1% by volume or more and 70% by volume or less.
<II-9> A nonaqueous electrolytic solution battery comprising: a positive electrode having a positive electrode active material capable of absorbing and releasing a metal ion; a negative electrode having a negative electrode active material capable of absorbing and releasing a metal ion; and the nonaqueous electrolytic solution according to any one of <11-1> to <II-8>.
<III-1> A nonaqueous electrolytic solution for a nonaqueous electrolytic solution battery comprising a negative electrode having a negative electrode active material comprising a metal element and/or a metalloid element capable of being alloyed with Li, wherein the nonaqueous electrolytic solution comprises a compound (A) represented by formula (I): 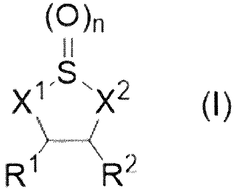 wherein X¹ and X² are each independently an oxygen atom or CH₂, R¹ and R² are each independently a hydrogen atom, a halogen atom, or a hydrocarbon group, and n is 1 or 2, provided that either one of R¹ and R² is a hydrocarbon group containing at least one carbon-carbon double bond, and when n is 2, at least one of X¹ and X² is CH₂.
<III-2> The nonaqueous electrolytic solution according to <111-1>, wherein the compound (A) is a compound represented by the following formula (II): 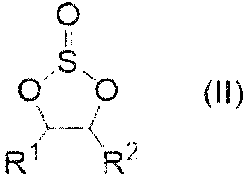 wherein R¹ and R² are the same as R¹ and R² in the formula (I).
<III-3> The nonaqueous electrolytic solution according to <III-1> or <111-2>, wherein R¹ and R² are each independently one selected from a hydrogen atom, a halogen atom, a vinyl group, and an allyl group, and either one of R¹ and R² is selected from a vinyl group and an allyl group.
<III-4> The nonaqueous electrolytic solution according to any one of <111-1> to <111-3>, further comprising 0.001% by mass or more and 5% by mass or less of one or more anion-containing compounds selected from the group consisting of a phosphate anion-containing compound having a P-F bond and a P=O bond, an anion-containing compound having a S=O bond, and an oxalate complex anion-containing compound, in the nonaqueous electrolytic solution.
<III-5> The nonaqueous electrolytic solution according to any one of <III-1> to <111-4>, wherein the nonaqueous electrolytic solution comprises 0.01% by mass or more and 10% by mass or less of the compound (A).
<III-6> The nonaqueous electrolytic solution for a battery according to any one of <III-1> to <111-5>, wherein the nonaqueous electrolytic solution further comprises one or more selected from the group consisting of a cyclic carbonate having a carbon-carbon unsaturated bond and a fluorine-atom-containing cyclic carbonate.
<III-7> The nonaqueous electrolytic solution according to any one of <III-1> to <111-6>, wherein the nonaqueous electrolytic solution further comprises a linear carboxylate.
<III-8> A nonaqueous electrolytic solution battery comprising: a nonaqueous electrolytic solution; a positive electrode having a positive electrode active material capable of absorbing and releasing a metal ion; and a negative electrode having a negative electrode active material capable of absorbing and releasing a metal ion, wherein the nonaqueous electrolytic solution comprises a compound (A) represented by formula (I), and the negative electrode active material comprises a material comprising a metal element and/or a metalloid element capable of being alloyed with Li: 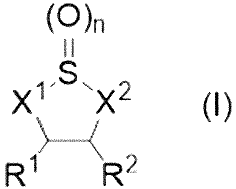 wherein X¹ and X² are each independently an oxygen atom or CH₂, R¹ and R² are each independently a hydrogen atom, a halogen atom, or a hydrocarbon group, and n is 1 or 2, provided that either one of R¹ and R² is a hydrocarbon group containing at least one carbon-carbon unsaturated bond, and when n is 2, at least one of X¹ and X² is CH₂.
<III-9> The nonaqueous electrolytic solution battery according to <111-8>, wherein the negative electrode active material comprises a Si compound.
<III-10> The nonaqueous electrolytic solution battery according to <III-8> or <111-9>, wherein the compound (A) is a compound represented by the following formula (II): 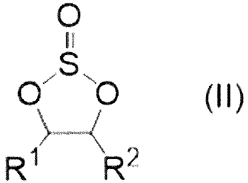 wherein R¹ and R² are the same as R¹ and R² in the formula (I).
<III-11> The nonaqueous electrolytic solution battery according to any one of <III-8> to <111-10>, wherein R¹ and R² are each independently one selected from a hydrogen atom, a halogen atom, a vinyl group, and an allyl group, and either one of R¹ and R² is selected from a vinyl group and an allyl group.
<III-12> The nonaqueous electrolytic solution battery according to any one of <III-8> to <111-11>, wherein the nonaqueous electrolytic solution further comprises 0.001% by mass or more and 5% by mass or less of one or more anion-containing compounds selected from the group consisting of a phosphate anion-containing compound having a P-F bond and a P=O bond, an anion-containing compound having a S=O bond, and an oxalate complex anion-containing compound, in the nonaqueous electrolytic solution.
<III-13> The nonaqueous electrolytic solution battery according to any one of <111-8> to <III-12>, wherein the nonaqueous electrolytic solution comprises 0.01% by mass or more and 10% by mass or less of the compound (A).
<III-14> The nonaqueous electrolytic solution battery according to any one of <III-8> to <111-13>, wherein the nonaqueous electrolytic solution further comprises one or more selected from the group consisting of a cyclic carbonate having a carbon-carbon unsaturated bond and a fluorine-atom-containing cyclic carbonate.
<III-15> The nonaqueous electrolytic solution battery according to any one of <III-8> to <III-14>, wherein the nonaqueous electrolytic solution further comprises a linear carboxylate.
<III-16> A use of a nonaqueous electrolytic solution for a nonaqueous electrolytic solution battery comprising a negative electrode having a negative electrode active material comprising a metal element and/or a metalloid element capable of being alloyed with Li, wherein the nonaqueous electrolytic solution comprises a compound (A) represented by formula (1): 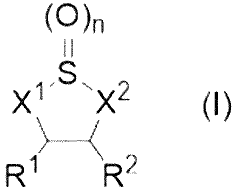 wherein X¹ and X² are each independently an oxygen atom or CH₂, R¹ and R² are each independently a hydrogen atom, a halogen atom, or a hydrocarbon group, and n is 1 or 2, provided that either one of R¹ and R² is a hydrocarbon group containing at least one carbon-carbon double bond, and when n is 2, at least one of X¹ and X² is CH₂;
<111-17> The use according to <III-16>, wherein the negative electrode active material comprises a Si compound.
<III-18> The use according to <111-16> or <III-17>, wherein the compound (A) is a compound represented by the following formula (II): 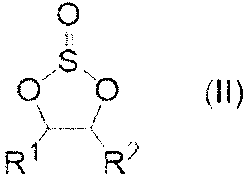 wherein R¹ and R² are the same as R¹ and R² in the formula (I).
<III-19> The use according to any one of <111-16> to <III-18>, wherein R¹ and R² are each independently one selected from a hydrogen atom, a halogen atom, a vinyl group, and an allyl group, and either one of R¹ and R² is selected from a vinyl group and an allyl group.
<III-20> The use according to any one of <111-16> to <111-19>, wherein the nonaqueous electrolytic solution further comprises one or more anion-containing compounds selected from the group consisting of a phosphate anion-containing compound having a P-F bond and a P=O bond, an anion-containing compound having a S=O bond, and an oxalate complex anion-containing compound.
<III-21> The use according to any one of <111-16> to <111-20>, wherein the nonaqueous electrolytic solution comprises 0.01% by mass or more and 10% by mass or less of the compound (A).
<III-22> The use according to any one of <111-16> to <III-21>, wherein the nonaqueous electrolytic solution further comprises one or more selected from the group consisting of a cyclic carbonate having a carbon-carbon unsaturated bond and a fluorine-atom-containing cyclic carbonate.
<III-23> The use according to any one of <111-16> to <III-22>, wherein the nonaqueous electrolytic solution further comprises a linear carboxylate.

### Examples

Hereinafter, the present invention will be described more specifically with reference to Examples and Comparative Examples, but the present invention is not limited to these Examples.

Compounds used in the present Examples are shown below.

### Compound (A): vinyl ethylene sulfite

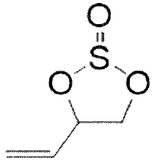

Specific anion-containing compound (X): LiPO₂F₂: lithium difluorophosphate
Specific anion-containing compound (X): LiBOB: lithium bis(oxalate)borate
Specific anion-containing compound (X): LiSO₃F: lithium fluorosulfonate
ES: ethylene sulfite
DMS: dimethyl sulfite
VEC: vinyl ethylene carbonate
VC: vinylene carbonate
PRES: 1-propene-1,3-sultone
MA: methyl acetate

### [First Aspect]

### <Examples 1-1 to 1-4 and Comparative Examples 1-1 to 1-8>

### (Preparation of Nonaqueous Electrolytic Solution)

A nonaqueous electrolytic solution was prepared by dissolving, under a dry argon atmosphere, sufficiently dried LiPF₆ in a mixture of ethylene carbonate, ethyl methyl carbonate, and dimethyl carbonate (volume ratio: 3:4:3) so that the concentration in the nonaqueous electrolytic solution was 1.2 mol/L (14.5% by mass), and further dissolving vinyl ethylene sulfite (VES) as a compound (A) and a specific anion-containing compound (X) in the nonaqueous electrolytic solution so as to obtain the content shown in Table 1. Using this nonaqueous electrolytic solution, a nonaqueous electrolytic solution secondary battery was fabricated by the following method. In addition, the specific anion-containing compound (X) was not used in Example 1-1, VES was not used in Comparative Examples 1-1, 1-5, and 1-7, and ES, DMS, or VEC was used instead of the compound (A) in Comparative Examples 1-2 to 1-4, respectively.

### (Fabrication of Positive Electrode 1)

90 parts by mass of lithium cobalt nickel manganese oxide (Li_{1.0}Ni_{0.61}Co_{0.20}Mn_{0.19}O₂) (Ni/M molar ratio = 0.61, carbonate concentration: 91 µmol/g) which is a lithium transition metal-based compound (B) (hereinafter referred to as "compound (B)") as a positive electrode active material, 7 parts by mass of acetylene black as an electroconductive material, and 3 parts by mass of polyvinylidene fluoride (PVdF) as a binder were mixed in N-methyl-2-pyrrolidone to form a slurry. The slurry was uniformly applied onto an aluminum foil having a thickness of 15 µm, dried, and then roll-pressed to obtain a positive electrode 1. The density of the positive electrode active material layer in the positive electrode 1 was 3.3 g/cm³.

### (Fabrication of Positive Electrode 2)

A positive electrode 2 was fabricated in the same manner as the positive electrode 1 by using 97 parts by mass of lithium cobalt oxide (LiCoO₂) (Ni/M molar ratio = 0, carbonate concentration: 6 µmol/g) as a positive electrode active material, 1.5 parts by mass of acetylene black as an electroconductive material, and 1.5 parts by mass of polyvinylidene fluoride (PVdF) as a binder. The density of the positive electrode active material layer in the positive electrode 2 was 3.6 g/cm³.

### (Fabrication of Positive Electrode 3)

A positive electrode 3 was fabricated in the same manner as the positive electrode 1 by using 85 parts by mass of lithium cobalt nickel manganese oxide (Li_{1.05}Ni_{0.34}Mn_{0.33}Co_{0.33}O₂) (Ni/M molar ratio = 0.34, carbonate concentration: 12 µmol/g) as a positive electrode active material, 10 parts by mass of acetylene black as an electroconductive material, and 5 parts by mass of polyvinylidene fluoride (PVdF) as a binder. The density of the positive electrode active material layer in the positive electrode 3 was 2.6 g/cm³.

### (Fabrication of Negative Electrode)

49 parts by mass of graphite powder as a negative electrode active material, 50 parts by mass of an aqueous dispersion of sodium carboxymethyl cellulose (concentration of sodium carboxymethyl cellulose: 1% by mass) as a thickener, and 1 part by mass of an aqueous dispersion of styrene-butadiene rubber (concentration of styrene-butadiene rubber: 50% by mass) as a binder were mixed with a disperser to form a slurry. The obtained slurry was uniformly applied onto a copper foil having a thickness of 10 µm, dried, and roll-pressed to obtain a negative electrode.

### (Production of Nonaqueous Electrolytic Solution Secondary Battery)

The positive electrode and the negative electrode fabricated above, and a polyolefin separator were laminated in the order of the negative electrode, the separator, and the positive electrode. The thus-obtained battery component was wrapped with an aluminum laminated film, and the aforementioned nonaqueous electrolytic solution was injected thereinto, followed by vacuum sealing to fabricate a sheet-shaped nonaqueous electrolytic solution secondary battery. As the positive electrode, the positive electrode shown in Table 1 was used.

### [Evaluation of Nonaqueous Electrolytic Solution Secondary Battery]

The nonaqueous electrolytic solution secondary battery fabricated above was evaluated as follows.

### (Initial Charging and Discharging)

In a 25°C thermostatic chamber, a sheet-shaped nonaqueous electrolytic solution secondary battery was constant-current charged up to 3.7 V at a current equivalent to 0.05 C, followed by constant-current-constant-voltage charging (hereinafter, also referred to as "CC-CV charging") at 0.2 C to a voltage of 4.25 V, and then constant-current discharged at 0.2 C up to 2.5 V.

Further, the secondary battery was CC-CV charged at 0.2 C up to 4.1 V, and then stored at 60°C for 24 hours to stabilize the nonaqueous electrolytic solution secondary battery. Thereafter, at 25°C, the secondary battery was constant-current discharged at 0.2 C up to 2.5 V, and then CC-CV charging was performed at 0.2 C to a voltage of 4.25 V. Thereafter, constant-current discharging was performed at 0.2 C up to 2.5 V, and the discharge capacity at this time was defined as the initial capacity.

Thereafter, at 25°C, CC-CV charging was performed at 0.2 C to a voltage of 3.7 V. The secondary battery was subjected to constant-current discharging at 0.05 C, 0.1 C, 0.25 C, 0.5 C, 0.75 C, and 1 C, respectively, at 25°C, and the voltage at 10 seconds after the discharging was measured. The internal resistance was obtained from this current-voltage straight line and defined as the initial resistance (R1).

Next, CC-CV charging was performed at 0.2 C up to 4.25 V, and initial charging and discharging were completed.

Here, 1 C represents a current value at which the reference capacity of the battery is discharged in one hour, and for example, 0.025 C represents a current value of 1/40 thereof. The same applies hereinafter.

### [Evaluation of Gas Generation Amount after High-Temperature Storage and Direct CurrentResistance (DCR) Retention Rate after High-Temperature Storage]

The nonaqueous electrolytic solution secondary battery after the initial charging and discharging described above was stored under conditions of 85°C and 24 hours. At that time, the nonaqueous electrolytic solution secondary battery before the initial charging and discharging and after the high-temperature storage was immersed in an ethanol bath in a normal temperature state to measure the volume, and the volume change was defined as the "gas generation amount after high-temperature storage" of the battery.

This nonaqueous electrolytic solution secondary battery was subjected to constant-current discharging at 0.2 C up to 2.5 V and then CC-CV charging at 0.2 C to a voltage of 4.25 V in a 25°C thermostatic chamber. Thereafter, constant-current discharging at 0.2 C up to 2.5 V was performed.

Thereafter, at 25°C, CC-CV charging was performed at 0.2 C to a voltage of 3.7 V. Further, the secondary battery was subjected to constant-current discharging at 0.05 C, 0.1 C, 0.25 C, 0.5 C, 0.75 C, and 1 C, respectively, at 25°C, and the voltage at 10 seconds after the discharging was measured. The internal resistance was obtained from this current-voltage straight line and defined as the resistance after storage (R2), and the rate of change between R1 and R2 [R2/R1 × 100] was defined as the "DCR retention rate after high-temperature storage".

It can be said that the smaller the gas generation amount after high-temperature storage and the DCR retention rate after high-temperature storage, the more preferable.

Table 1 shows the DCR retention rate after high-temperature storage and the gas generation amount after high-temperature storage of Examples and Comparative Examples using any of the positive electrodes 1 to 3 (in the lithium batteries using each positive electrode, the values are expressed as relative values when the lithium ion battery (Comparative Example 1-1, 1-5, or 1-7) in which the nonaqueous electrolytic solution does not comprise the compound (A) and the specific anion-containing compound (X) is set to 100).

**Table 1**

| | Compound (A) (% by mass) | | Specific anion-containing compound (X) (% by mass) | | Other compound (% by mass) | | Positive electrode | DCR retention rate after high-temp. storage (%) | Amount of gas generated after high-temp, storage (%) |
|---|---|---|---|---|---|---|---|---|---|
| Example I-1 | VES | 0.5 | - | - | - | - | 1 | 95 | 94 |
| Example I-2 | VES | 0.5 | LiPO₂F₂ | 0.5 | - | - | 1 | 94 | 57 |
| Example I-3 | VES | 0.5 | LiBOB | 0.5 | - | - | 1 | 87 | 85 |
| Example I-4 | VES | 0.5 | LiSO₃F | 0.5 | - | - | 1 | 92 | 93 |
| Comparative Example I-1 | - | - | - | - | - | - | 1 | 100 | 100 |
| Comparative Example I-2 | - | - | - | - | ES | 0.5 | 1 | 105 | 141 |
| Comparative Example I-3 | - | - | - | - | DMS | 0.5 | 1 | 102 | 131 |
| Comparative Example I-4 | - | - | - | - | VEC | 0.5 | 1 | 101 | 100 |
| Comparative Example I-5 | - | - | - | - | - | - | 2 | 100 | 100 |
| Comparative Example I-6 | VES | 0.5 | - | - | - | - | 2 | 107 | 120 |
| Comparative Example I-7 | - | - | - | - | - | - | 3 | 100 | 100 |
| Comparative Example I-8 | VES | 0.5 | - | - | - | - | 3 | 97 | 113 |

As is clear from Table 1, the nonaqueous electrolytic solution secondary battery (Example 1-1) comprising the nonaqueous electrolytic solution comprising the compound (A) and the positive electrode 1 having the positive electrode active material comprising the compound (B) suppressed the worsening of the DCR retention rate after high-temperature storage and suppressed the increase in the gas generation amount after high-temperature storage as compared with the nonaqueous electrolytic solution secondary battery (Comparative Example 1-1) comprising the nonaqueous electrolytic solution comprising no compound (A) and the positive electrode 1 and the nonaqueous electrolytic solution secondary batteries (Comparative Examples 1-2 to 1-4) comprising the nonaqueous electrolytic solution comprising ES, DMS, or VEC used in the prior art instead of the compound (A) and the positive electrode 1.

In addition, it can be seen that the nonaqueous electrolytic solution secondary batteries (Examples 1-2 to 1-4) comprising the nonaqueous electrolytic solution comprising the compound (A) and a specific amount of the specific anion-containing compound (X) and the positive electrode 1 having the positive electrode active material comprising the compound (B) suppressed the worsening of the DCR retention rate after high-temperature storage, and suppressed the increase in the gas generation amount after high-temperature storage at a higher level than the nonaqueous electrolytic solution secondary battery of Example 1-1.

In addition, in the nonaqueous electrolytic solution secondary batteries comprising the nonaqueous electrolytic solution comprising the compound (A) and the positive electrode 2 or the positive electrode 3 not comprising the compound (B) (Comparative Example 1-6 and Comparative Example 1-8), the improvement in the DCR retention rate after high-temperature storage was small or worse, and the gas generation amount after high-temperature storage was increased, as compared with the nonaqueous electrolytic solution secondary batteries comprising the nonaqueous electrolytic solution not comprising the compound (A) and the positive electrode 2 or the positive electrode 3 not comprising the compound (B) (Comparative Example 1-5 and Comparative Example 1-7). That is, in the batteries using the positive electrode 2 or the positive electrode 3 not comprising the compound (B), when the nonaqueous electrolytic solution comprising the compound (A) was used, an improvement in the DCR retention rate after high-temperature storage was not observed, and the gas generation amount after high-temperature storage was worsened rather than suppressed. From this, it can be seen that, as shown in the Examples, the effects of improving the DCR retention rate after high-temperature storage and suppressing an increase in the gas generation amount after high-temperature storage are effects unique to the nonaqueous electrolytic solution secondary battery comprising the nonaqueous electrolytic solution comprising the compound (A) and the positive electrode comprising the compound (B).

In addition, from the results of the nonaqueous electrolytic solution secondary battery of Example 1-1 and the nonaqueous electrolytic solution secondary batteries of Comparative Examples 1-6 and 1-8, it is considered that the compound (A) acts on the Ni site in the positive electrode active material of the positive electrode to form a surface film, thereby suppressing a side reaction between the positive electrode and components other than the compound (A) such as the electrolyte of the nonaqueous electrolytic solution, whereby the effect of the first aspect of the nonaqueous electrolytic solution of the present invention is obtained.

### [Second Aspect]

### <Examples 11-1-1 to 11-1-3 and Comparative Examples 11-1-1 to 11-1-13>

### (Preparation of Nonaqueous Electrolytic Solution)

A nonaqueous electrolytic solution was prepared by dissolving, under a dry argon atmosphere, sufficiently dried LiPF₆ in a mixture of ethylene carbonate, ethyl methyl carbonate, and dimethyl carbonate (volume ratio: 3:4:3) so that the concentration in the nonaqueous electrolytic solution was 1.0 mol/L (12.3% by mass), and further dissolving vinyl ethylene sulfite (VES) as a compound (A) and a specific anion-containing compound (X) in the nonaqueous electrolytic solution so as to obtain the content shown in Table 2. Using this nonaqueous electrolytic solution, a nonaqueous electrolytic solution secondary battery was fabricated by the following method. In Comparative Examples 11-1-1, 11-1-3, 11-1-5, and II-1-7, the compound (A) was not used, and in Comparative Examples 11-1-1 and 11-1-2, the anion-containing compound (B) was not used. In addition, in Comparative Examples 11-1-9 and II-1-10, VC and PRES were used instead of the specific anion-containing compound (X), respectively, and in Comparative Examples 11-1-11 to 11-1-13, VC, VEC, or ES were further added to the electrolytic solution of Comparative Example 11-1-7, respectively.

### (Fabrication of Positive Electrode)

85 parts by mass of lithium cobalt nickel manganese oxide (Li_{1.05}Ni_{0.34}Co_{0.33}Mn_{0.33}O₂) as a positive electrode active material, 10 parts by mass of acetylene black as an electroconductive material, and 5 parts by mass of polyvinylidene fluoride (PVdF) as a binder were mixed in N-methyl-2-pyrrolidone to form a slurry. The slurry was uniformly applied onto an aluminum foil having a thickness of 15 µm, dried, and then roll-pressed to obtain a positive electrode. The density of the positive electrode active material layer in the positive electrode was 2.6 g/cm³.

### (Fabrication of Negative Electrode)

49 parts by mass of graphite powder as a negative electrode active material, 50 parts by mass of an aqueous dispersion of sodium carboxymethyl cellulose (concentration of sodium carboxymethyl cellulose: 1% by mass) as a thickener, and 1 part by mass of an aqueous dispersion of styrene-butadiene rubber (concentration of styrene-butadiene rubber: 49% by mass) as a binder were mixed with a disperser to form a slurry. The obtained slurry was uniformly applied onto a copper foil having a thickness of 10 µm, dried, and roll-pressed to obtain a negative electrode. The density of the negative electrode active material layer in the negative electrode was 1.35 g/cm³.

### (Production of Nonaqueous Electrolytic Solution Secondary Battery)

The positive electrode and the negative electrode fabricated above, and a polyolefin separator were laminated in the order of the negative electrode, the separator, and the positive electrode. The thus-obtained battery component was wrapped with an aluminum laminated film, and the aforementioned nonaqueous electrolytic solution was injected thereinto, followed by vacuum sealing to fabricate a sheet-shaped nonaqueous electrolytic solution secondary battery.

### [Evaluation of Nonaqueous Electrolytic Solution Secondary Battery]

The nonaqueous electrolytic solution secondary battery fabricated above was evaluated as follows.

### (Initial Charging and Discharging)

In a 25°C thermostatic chamber, a sheet-shaped nonaqueous electrolytic solution secondary battery was constant-current charged up to 3.6 V at a current equivalent to 0.025 C, followed by constant-current-constant-voltage charging (CC-CV charging) at 0.167 C to a voltage of 4.2 V, and then constant-current discharged at 0.167 C up to 2.5 V.

Further, the secondary battery was CC-CV charged at 0.167 C up to 4.1 V, and then stored at 60°C for 12 hours to stabilize the nonaqueous electrolytic solution secondary battery. Thereafter, at 25°C, the secondary battery was constant-current discharged at 0.167 C up to 2.5 V, and then CC-CV charging was performed at 0.167 C to a voltage of 4.2 V. Thereafter, constant-current discharging was performed at 0.167 C up to 2.5 V, and the battery capacity at this time was defined as the initial capacity. Next, CC-CV charging was performed at 0.2 C up to 4.2 V, and initial charging and discharging were completed.

Here, 1 C represents a current value at which the reference capacity of the battery is discharged in one hour, and for example, 0.025 C represents a current value of 1/40 thereof. The same applies hereinafter.

### (Evaluation of Recovery Capacity Retention Rate)

The nonaqueous electrolytic solution secondary battery in which the initial charging and discharging were completed was allowed to stand at 60°C for two weeks. After two weeks of standing, at 25°C, the secondary battery was constant-current discharged at 0.167 C up to 2.5 V, and then CC-CV charging was performed at 0.167 C to a voltage of 4.2 V. Thereafter, constant-current discharging was performed at 0.167 C up to 2.5 V, and the battery capacity at this time was defined as the recovery capacity. [(recovery capacity)/(initial capacity) × 100] was defined as the recovery capacity retention rate.

Table 2 shows the recovery capacity retention rates in relative values with respect to 100 for the nonaqueous electrolytic solution secondary battery (Comparative Example 11-1-1) that does not comprise the compound (A) and a specific amount of the specific anion-containing compound (X). It should be noted that the larger the recovery capacity retention rate, the more preferable.

**Table 2**

| | Compound (A) (% by mass) | Specific anion-containing compound (X) (% by mass) | | Other compound (% by mass) | | Recovery capacity retention rate (% by mass) |
|---|---|---|---|---|---|---|
| Example II-1-1 | 0.5 | LiPO₂F₂ | 0.5 | - | - | 102.5 |
| Example II-1-2 | 0.5 | LiSO₃F | 0.5 | - | - | 102.8 |
| Example II-1-3 | 0.5 | LiBOB | 0.5 | - | - | 102.7 |
| Comparative Example II-1-1 | - | - | - | - | - | 100.0 |
| Comparative Example II-1-2 | 0.5 | - | - | - | - | 100.2 |
| Comparative Example II-1-3 | - | LiPO₂F₂ | 0.5 | - | - | 100.2 |
| Comparative Example II-1-4 | 0.5 | LiPO₂F₂ | 6.0 | - | - | 100.0 |
| Comparative Example II-1-5 | < | LiSO₃F | 0.5 | - | - | 100.7 |
| Comparative Example II-1-6 | 0.5 | LiSO₃F | 6.0 | - | - | 100.2 |
| Comparative Example II-1-7 | - | LiBOB | 0.5 | - | - | 100.6 |
| Comparative Example II-1-8 | 0.5 | LiBOB | 6.0 | - | - | 100.6 |
| Comparative Example II-1-9 | 0.5 | - | - | VC | 1.0 | 100.1 |
| Comparative Example II-1-10 | 0.5 | - | - | PRES | 1.0 | 100.1 |
| Comparative Example II-1-11 | - | LiBOB | 0.5 | VC | 0.5 | 101.1 |
| Comparative Example II-1-12 | - | LiBOB | 0.5 | VEC | 0.5 | 101.4 |
| Comparative Example II-1-13 | - | LiBOB | 0.5 | ES | 0.5 | 100.9 |

It can be seen from Table 2 that nonaqueous electrolytic solution secondary batteries (Examples II-1-1 to 11-1-3) comprising the compound (A) and a specific amount of the specific anion-containing compound (X) in the nonaqueous electrolytic solution have improved recovery capacity retention rate of nonaqueous electrolytic solution batteries, as compared with:
(a) the nonaqueous electrolytic solution secondary battery (Comparative Example II-1-1) in which the nonaqueous electrolytic solution does not comprise the compound (A) and the specific anion-containing compound (X);
(b) the nonaqueous electrolytic solution secondary battery (Comparative Example II-1-2) in which the nonaqueous electrolytic solution comprises the compound (A) but does not comprise the specific anion-containing compound (X);
(c) the nonaqueous electrolytic solution secondary batteries (Comparative Examples 11-1-3, 11-1-5, and II-1-7) in which the nonaqueous electrolytic solution does not comprise the compound (A) but comprises the specific anion-containing compound (X);
(d) the nonaqueous electrolytic solution secondary batteries (Comparative Examples 11-1-4, II-1-6, and 11-1-8) in which the nonaqueous electrolytic solution comprises the compound (A) and comprises the specific anion-containing compound (X) in an amount exceeding a predetermined amount;
(e) the nonaqueous electrolytic solution secondary batteries (Comparative Examples 11-1-9 and 11-1-10) in which the nonaqueous electrolytic solution comprises the compound (A) and a material used in the prior art instead of the specific anion-containing compound (X); and
(f) the nonaqueous electrolytic solution secondary batteries (Comparative Examples II-1-11 to 11-1-13) in which the nonaqueous electrolytic solution comprises the specific anion-containing compound (X) and a material used in the prior art.

It is considered that the reason why the recovery capacity retention rate of the nonaqueous electrolytic solution battery of the present invention is improved is that by combining the compound (A) with a specific amount of the specific anion-containing compound (X), the compound (A) and the specific anion-containing compound (X) form a poorly soluble and strong co-surface film, and a side reaction on the surface of the electrode is efficiently suppressed.

### <Examples 11-2-1 and II-2-2 and Comparative Examples II-2-1 to II-2-5>

### (Preparation of Nonaqueous Electrolytic Solution)

A nonaqueous electrolytic solution was prepared by dissolving, under a dry argon atmosphere, sufficiently dried LiPF₆ in a mixture of ethylene carbonate, dimethyl carbonate, and methyl acetate (volume ratio: 3:4:3) so that the concentration in the nonaqueous electrolytic solution was 1.0 mol/L (12.5% by mass), and further dissolving a compound (A) and a specific anion-containing compound (X) in the nonaqueous electrolytic solution so as to obtain the content shown in Table 3. In Comparative Examples II-2-2 to 11-2-4, the compound (A) was not used, and in Comparative Examples II-2-1 to 11-2-2, the specific anion-containing compound (X) was not used. Using this nonaqueous electrolytic solution, a nonaqueous electrolytic solution secondary battery was fabricated by the same method as in Example II-1-1.

### [Evaluation of Nonaqueous Electrolytic Solution Secondary Battery]

The nonaqueous electrolytic solution secondary battery fabricated above was evaluated as follows.

### (Initial Charging and Discharging)

In a 25°C thermostatic chamber, a sheet-shaped nonaqueous electrolytic solution secondary battery was constant-current charged up to 3.6 V at a current equivalent to 0.025 C, followed by CC-CV charging at 0.167 C to a voltage of 4.2 V, and then constant-current discharged at 0.167 C up to 2.5 V.

Further, the secondary battery was CC-CV charged at 0.167 C up to 4.1 V, and then stored at 60°C for 12 hours to stabilize the nonaqueous electrolytic solution secondary battery. Thereafter, at 25°C, the secondary battery was constant-current discharged at 0.167 C up to 2.5 V, and then CC-CV charging was performed at 0.167 C to a voltage of 4.2 V. Thereafter, constant-current discharging was performed at 0.167 C up to 2.5 V, and the battery capacity at this time was defined as the initial capacity. Next, CC-CV charging was performed at 0.167 C to a voltage of 4.2 V, and initial charging and discharging were completed.

### (Evaluation of Recovery Capacity Retention Rate)

The recovery capacity retention rate was evaluated in the same manner as in Example 11-1-1.

### (Evaluation of High-Temperature Storage Gas Generation Rate)

Before the initial charging and discharging and after the evaluation of the recovery capacity retention rate, the nonaqueous electrolytic solution secondary battery was immersed in an ethanol bath in a normal temperature state to measure the volume, and the volume change was defined as the high-temperature storage gas generation amount.

Table 3 shows the evaluation results of the recovery capacity retention rate and the evaluation results of the high-temperature storage gas generation amount, which are the recovery capacity retention rate (relative value with respect to 100 as the recovery capacity retention rate of the battery comprising only the compound (A) as an additive (Comparative Example 11-2-1)) and the high-temperature storage gas generation rate (relative value with respect to 100 as the high-temperature storage gas generation amount of the battery comprising only the compound (A) as an additive (Comparative Example 11-2-1)). The smaller the high-temperature storage gas generation rate, the more preferable.

**Table 3**

| | Compound (A) (% by mass) | Specific anion-containing compound (X) (% by mass) | | Recovery capacity retention rate (% by mass) | High-temperature storage gas generation rate (%) |
|---|---|---|---|---|---|
| Example II-2-1 | 1.0 | LiBOB | 1.0 | 107.9 | 48.0 |
| Example II-2-2 | 1.0 | LiPO₂F₂ | 0.5 | 106.7 | 73.0 |
| Comparative Example II-2-1 | 1.0 | - | - | 100.0 | 100.0 |
| Comparative Example II-2-2 | - | - | - | 92.2 | 186.0 |
| Comparative Example II-2-3 | - | LiBOB | 1.0 | 92.3 | 102.0 |
| Comparative Example II-2-4 | < | LiPO₂F₂ | 0.5 | 87.4 | 145.0 |
| Comparative Example II-2-5 | 1.0 | LiBOB | 6.0 | 106.0 | 522.0 |

From Table 3, it can be seen that even when a part of the linear carbonate in the nonaqueous electrolytic solution of the nonaqueous electrolytic solution secondary battery is replaced with methyl acetate, the nonaqueous electrolytic solution secondary batteries (Examples 11-2-1 and 11-2-2) in which the nonaqueous electrolytic solution comprises the compound (A) and a specific amount of the specific anion-containing compound (X) are improved in the recovery capacity retention rate of the nonaqueous electrolytic solution battery, as compared with:
(a) the nonaqueous electrolytic solution secondary battery (Comparative Example 11-2-2) in which the nonaqueous electrolytic solution does not comprise the compound (A) and the specific anion-containing compound (X);
(b) the nonaqueous electrolytic solution secondary battery (Comparative Example 11-2-1) in which the nonaqueous electrolytic solution comprises the compound (A) and does not comprise the specific anion-containing compound (X);
(c) the nonaqueous electrolytic solution secondary batteries (Comparative Examples 11-2-3 and 11-2-4) in which the nonaqueous electrolytic solution does not comprise the compound (A) and comprises the specific anion-containing compound (X); and
(d) the nonaqueous electrolytic solution secondary battery (Comparative Example II-2-5) in which the nonaqueous electrolytic solution comprises the compound (A) and comprises the specific anion-containing compound (X) in an amount exceeding a predetermined amount.

In addition, in the nonaqueous electrolytic solution secondary batteries (Examples II-2-1 and II-2-2) in which the nonaqueous electrolytic solution comprises the compound (A) and a specific amount of the specific anion-containing compound (X), it can be seen from the same comparison that the gas generation rate after high-temperature storage, which is a problem, is suppressed in a case where a part of the linear carbonate in the nonaqueous electrolytic solution of the nonaqueous electrolytic solution secondary battery is replaced with methyl acetate.

### <Examples 11-3-1 and II-3-2 and Comparative Example II-3-1>

### (Preparation of Nonaqueous Electrolytic Solution)

A nonaqueous electrolytic solution was prepared in the same manner as in Example II-2-1, except that methyl propionate was used as the ester solvent, and the compound (A) and the specific anion-containing compound (X) were used so as to have the contents shown in Table 4. In Comparative Example II-3-1, the specific anion-containing compound (X) was not used. Using this nonaqueous electrolytic solution, a nonaqueous electrolytic solution secondary battery was fabricated by the same method as in Example II-1-1.

### [Evaluation of Nonaqueous Electrolytic Solution Secondary Battery]

The nonaqueous electrolytic solution secondary battery fabricated above was evaluated in the same manner as in Example II-2-1.

Table 4 shows, as the evaluation results described above, the recovery capacity retention rate (relative value with respect to 100 as the recovery capacity retention rate of the battery comprising only the compound (A) as an additive (Comparative Example 11-3-1)) and the high-temperature storage gas generation rate (relative value with respect to 100 as the high-temperature storage gas generation amount of the battery comprising only the compound (A) as an additive (Comparative Example II-3-1))

**Table 4**

| | Compound (A) (% by mass) | Specific anion-containing compound (X) (% by mass) | | Recovery capacity retention rate (% by mass) | High-temperature storage gas generation rate (%) |
|---|---|---|---|---|---|
| Example II-3-1 | 1.0 | LiBOB | 1.0 | 105.1 | 96.0 |
| Example II-3-2 | 1.0 | LiPO₂F₂ | 0.5 | 104.0 | 45.0 |
| Comparative Example II-3-1 | 1.0 | - | - | 100.0 | 100.0 |

From Table 4, it can be seen that even when a part of the linear carbonate in the nonaqueous electrolytic solution of the nonaqueous electrolytic solution secondary battery is replaced with methyl propionate, the nonaqueous electrolytic solution secondary batteries (Examples 11-3-1 and 11-3-2) in which the nonaqueous electrolytic solution comprises the compound (A) and a specific amount of the specific anion-containing compound (X) are improved in the recovery capacity retention rate and suppressed in the high-temperature storage gas generation rate as in Examples 11-2-1 and 11-2-2.

### <Examples 11-4-1 and Comparative Examples II-4-1 to II-4-3>

### (Preparation of Nonaqueous Electrolytic Solution)

A nonaqueous electrolytic solution was prepared in the same manner as in Example II-3-1, except that methyl acetate was used instead of methyl propionate, and the compound (A) and the specific anion-containing compound (X) were used so as to have the contents shown in Table 5. In Comparative Examples 11-4-2 and II-4-3, the compound (A) was not used, and in Comparative Examples 11-4-1 and II-4-2, the specific anion-containing compound (X) was not used. Using this nonaqueous electrolytic solution, a nonaqueous electrolytic solution secondary battery was fabricated by the same method as in Example 11-1-1.

### [Evaluation of Nonaqueous Electrolytic Solution Secondary Battery]

### (Initial Charging and Discharging)

The initial charging and discharging were completed in the same manner as in Example II-2-1.

### (Initial DCR Evaluation Test)

The nonaqueous electrolytic solution secondary battery in which the initial charging and discharging were completed was subjected to constant-current discharging up to 2.5 V at 0.167 C, and then to CC-CV charging up to 3.7 V at 0.167 C, at 25°C. Next, constant-current discharging was performed at 0.5 C, 1.0 C, and 1.5 C for 10 seconds, respectively, and the voltage at 10 seconds after the discharging was measured. The internal resistance was obtained from this current-voltage straight line, and defined as the initial room temperature DCR (direct current resistance).

Further, the secondary battery was subjected to constant-current discharging at -10°C, similarly at 0.25 C, 0.5 C, and 0.75 C for 10 seconds, respectively, and the voltage at 10 seconds after the discharging was measured. The internal resistance was obtained from this current-voltage straight line and defined as the initial low-temperature DCR.

### (High-Temperature Storage Endurance Test)

The nonaqueous electrolytic solution secondary battery subjected to the initial low-temperature DCR evaluation test was subjected to CC-CV charging (0.01 C cut) at 0.167 C up to 4.2 V at 25°C, and then allowed to stand at 60°C for 2 weeks to perform high-temperature storage. Thereafter, the battery was sufficiently cooled, and then discharged to 2.5 V at a constant current of 0.167 C at 25°C. Next, the battery was CC-CV charged (0.01 C cut) to 4.2V at 0.167 C, and then discharged again to 2.5 V at 0.167 C.

### (Evaluation of DCR after High-Temperature Storage)

The nonaqueous electrolytic solution secondary battery subjected to high-temperature storage endurance test was subjected to constant-current discharging up to 2.5 V at 0.167 C and then to CC-CV charging up to 3.7 V at 0.167 C, at 25°C. Next, constant-current discharging was performed at 0.5 C, 1.0 C, and 1.5 C for 10 seconds, respectively, and the voltage at 10 seconds after the discharging was measured. The internal resistance was obtained from this current-voltage straight line and was defined as the room temperature DCR after high-temperature storage. Further, the secondary battery was subjected to constant-current discharging at -10°C, similarly at 0.25 C, 0.5 C, and 0.75 C for 10 seconds, respectively, and the voltage at 10 seconds after the discharging was measured. The internal resistance was obtained from this current-voltage straight line and was defined as the low-temperature DCR after storage, and [(low-temperature DCR after storage)/(initial low-temperature DCR) × 100] was defined as the low-temperature DCR increase amount after high-temperature storage.

Table 5 shows, as the evaluation results described above, the room temperature DCR increase rate after high-temperature storage (relative value with respect to 100 as the room temperature DCR after high-temperature storage of the battery comprising only the compound (A) as an additive (Comparative Example 11-4-1)) and the low-temperature DCR increase rate after high-temperature storage (relative value with respect to 100 as the low-temperature DCR increase amount after high-temperature storage of the battery comprising only the compound (A) as an additive (Comparative Example 11-4-1)). The smaller the room temperature DCR increase rate after high-temperature storage and the low-temperature DCR increase rate after high-temperature storage, the more preferable.

**Table 5**

| | Compound (A) (% by mass) | Specific anion-containing compound (X) (% by mass) | | Room temperature DCR increase rate after high-temperature storage (%) | Low-temperature DCR increase rate after high-temperature storage (%) |
|---|---|---|---|---|---|
| Example II-4-1 | 1.0 | LiPO₂F₂ | 0.5 | 90.0 | 92.0 |
| Comparative Example II-4-1 | 1.0 | - | - | 100.0 | 100.0 |
| Comparative Example II-4-2 | - | - | - | 129.0 | 143.0 |
| Comparative Example II-4-3 | - | LiPO₂F₂ | 0.5 | 105.0 | 139.0 |

From Table 5, it can be seen that when a part of the linear carbonate in the nonaqueous electrolytic solution of the nonaqueous electrolytic solution secondary battery is replaced with methyl acetate, the nonaqueous electrolytic solution secondary battery (Example II-4-1) in which the nonaqueous electrolytic solution comprises the compound (A) and the specific anion-containing compound (X) is suppressed in the room temperature DCR increase rate and the low-temperature DCR increase rate after high-temperature storage of the nonaqueous electrolytic solution secondary battery, as compared with:
(a) the nonaqueous electrolytic solution secondary battery (Comparative Example II-4-2) in which the nonaqueous electrolytic solution does not comprise the compound (A) and the specific anion-containing compound (X);
(b) the nonaqueous electrolytic solution secondary battery (Comparative Example II-4-1) in which the nonaqueous electrolytic solution comprises the compound (A) and does not comprise the specific anion-containing compound (X); and
(c) the nonaqueous electrolytic solution secondary battery (Comparative Example II-4-3) in which the nonaqueous electrolytic solution does not comprise the compound (A) and comprises the specific anion-containing compound (X).

### <Example 11-5-1 and Comparative Example 11-5-1>

### (Preparation of Nonaqueous Electrolytic Solution)

A nonaqueous electrolytic solution was prepared in the same manner as in Example II-3-1, except that the compound (A) and the specific anion-containing compound (X) were used so as to have the contents shown in Table 6. In Comparative Example 11-5-1, the specific anion-containing compound (X) was not used. Using this nonaqueous electrolytic solution, a nonaqueous electrolytic solution secondary battery was fabricated by the same method as in Example 11-1-1.

### [Evaluation of Nonaqueous Electrolytic Solution Secondary Battery]

The nonaqueous electrolytic solution secondary battery fabricated above was evaluated in the same manner as in Example 11-4-1.

Table 6 shows, as the evaluation results described above, the room temperature DCR increase rate after high-temperature storage (relative value with respect to 100 as the room temperature DCR after high-temperature storage of the battery comprising only the compound (A) as an additive (Comparative Example 11-5-1)) and the low-temperature DCR increase rate after high-temperature storage (relative value with respect to 100 as the low-temperature DCR increase amount after high-temperature storage of the battery comprising only the compound (A) as an additive (Comparative Example 11-5-1)). The smaller the room temperature DCR increase rate after high-temperature storage and the low-temperature DCR increase rate after high-temperature storage, the more preferable.

**Table 6**

| | Compound (A) (% by mass) | Specific anion-containing compound (X) (% by mass) | | Room temperature DCR increase rate after high-temperature storage (%) | Low-temperature DCR increase rate after high-temperature storage (%) |
|---|---|---|---|---|---|
| Example II-5-1 | 1.0 | LiPO₂F₂ | 0.5 | 98.0 | 99.0 |
| Comparative Example II-5-1 | 1.0 | - | - | 100.0 | 100.0 |

From Table 6, it can be seen that, even when a part of the linear carbonate in the nonaqueous electrolytic solution of the nonaqueous electrolytic solution secondary battery is replaced with methyl propionate, in the nonaqueous electrolytic solution secondary battery (Example 11-5-1) in which the nonaqueous electrolytic solution comprises the compound (A) and the specific anion-containing compound (X), the room temperature DCR increase rate and the low-temperature DCR increase rate of the nonaqueous electrolytic solution battery after high-temperature storage are suppressed as in Example 11-4-1.

### [Third Aspect]

### <Examples 111-1 to III-3 and Comparative Examples III-1 to III-4>

### (Preparation of Nonaqueous Electrolytic Solution)

Under a dry argon atmosphere, in a mixture of ethylene carbonate, ethyl methyl carbonate, and diethyl carbonate (volume ratio 3:4:3), sufficiently dried LiPF₆ was dissolved so that the concentration in the nonaqueous electrolytic solution was 1.2 mol/L (14.5% by mass), and in the resulting nonaqueous electrolytic solution, vinylene carbonate was dissolved so that the concentration was 2% by mass, and monofluoroethylene carbonate was dissolved so that the concentration was 2% by mass. Further, vinyl ethylene sulfite (VES) as the compound (A) was dissolved so that the concentrations in the nonaqueous electrolytic solution were the concentrations shown in Table 7. Furthermore, in each of Examples 111-2 and III-3 and Comparative Example III-2, LiPO₂F₂, LiSO₃F, or ES was dissolved so that the concentrations in the nonaqueous electrolytic solution were the concentrations shown in Table 7 to prepare a nonaqueous electrolytic solution. In Comparative Examples III-1 to III-3, the compound (A) was not used. Using this nonaqueous electrolytic solution, a nonaqueous electrolytic solution secondary battery was fabricated by the following method.

### (Fabrication of Positive Electrode)

85 parts by mass of lithium cobalt nickel manganese oxide (Li_{1.05}Ni_{0.34}Co_{0.33}Mn_{0.33}O₂) as a positive electrode active material, 10 parts by mass of acetylene black as an electroconductive material, and 5 parts by mass of polyvinylidene fluoride (PVdF) as a binder were mixed in N-methyl-2-pyrrolidone to form a slurry. The slurry was uniformly applied onto an aluminum foil having a thickness of 15 µm, dried, and then roll-pressed to obtain a positive electrode. The density of the positive electrode active material layer in the positive electrode was 2.6 g/cm³.

### (Fabrication of Negative Electrode 1)

Si fine particles having an average particle diameter of 50 nm were dispersed in flaky graphite having an average particle diameter of 35 µm, and the dispersion was put into a hybridization system (manufactured by Nara Machinery Co., Ltd.), and was treated by circulating or staying in the apparatus at a rotor rotation speed of 7000 rpm for 180 seconds to obtain a composite of Si fine particles and graphite particles. The obtained composite was mixed with coal tar pitch as an organic compound to be a carbon-based material so that the coverage after firing was 16.8%, and the mixture was kneaded and dispersed by a biaxial kneader. The obtained dispersion was introduced into a firing furnace and fired at 1000°C for 3 hours under a nitrogen atmosphere. The obtained fired product was further pulverized with a hammer mill and then selected with a sieve (45 µm) to prepare a negative electrode active material. The content of the Si element in the negative electrode active material was 14.0% by mass.

An aqueous dispersion of sodium carboxymethyl cellulose (concentration of sodium carboxymethyl cellulose: 1% by mass) as a thickener and an aqueous dispersion of styrene-butadiene rubber (concentration of styrene-butadiene rubber: 50% by mass) as a binder were added to a negative electrode active material (a mixture of the negative electrode active material and graphite prepared above (negative electrode active material: graphite, 35:65 in mass ratio)) and mixed with a disperser to form a slurry. The slurry was uniformly applied onto one surface of a copper foil having a thickness of 10 µm, dried, and then pressed to obtain a negative electrode 1. In the negative electrode after drying, the mass ratio of the negative electrode active material: sodium carboxymethylcellulose : styrene-butadiene rubber was 97.5:1.5:1.

### (Fabrication of Negative Electrode 2)

An aqueous dispersion of sodium carboxymethyl cellulose (concentration of sodium carboxymethyl cellulose: 1% by mass) as a thickener and an aqueous dispersion of styrene-butadiene rubber (concentration of styrene-butadiene rubber: 50% by mass) as a binder were added to 98 parts by mass of natural graphite, and the resulting mixture was mixed with a disperser to form a slurry. The obtained slurry was applied onto one surface of a copper foil having a thickness of 10 µm, dried, and then pressed to obtain a negative electrode 2. In the negative electrode after drying, the mass ratio of the negative electrode active material: sodium carboxymethylcellulose : styrene-butadiene rubber was 98:1:1.

### (Production of Nonaqueous Electrolytic Solution Secondary Battery)

The positive electrode and the negative electrode fabricated above, and a polyolefin separator were laminated in the order of the negative electrode, the separator, and the positive electrode. The thus-obtained battery component was wrapped with an aluminum laminated film, and the aforementioned nonaqueous electrolytic solution was injected thereinto, followed by vacuum sealing to fabricate a sheet-shaped nonaqueous electrolytic solution secondary battery. As the negative electrode, the negative electrode shown in Table 7 was used.

### [Evaluation of Nonaqueous Electrolytic Solution Secondary Battery]

The nonaqueous electrolytic solution secondary battery fabricated above was evaluated as follows.

### (Initial Charging and Discharging)

In a 25°C thermostatic chamber, a sheet-shaped nonaqueous electrolytic solution secondary battery was constant-current charged at a current equivalent to 0.05 C for 6 hours and then constant-current discharged at 0.2 C up to 3 V.

Further, the secondary battery was subjected to constant-current-constant-voltage charging (CC-CV charging) at 0.2 C up to 4.1 V, and then stored at 60°C for 24 hours to stabilize the nonaqueous electrolytic solution secondary battery. Thereafter, at 25°C, the secondary battery was constant-current discharged at 0.2 C up to 3 V, and then CC-CV charging was performed at 0.2 C to a voltage of 4.2 V. Thereafter, the secondary battery was constant-current discharged at 0.2 C up to 3 V, and then CC-CV charging was performed at 0.2 C to a voltage of 3.75 V. Thereafter, the thickness of the electrode portions of the sheet-shaped nonaqueous electrolytic solution secondary battery was measured and was defined as the initial electrode thicknesses.

Here, 1 C represents a current value at which the reference capacity of the battery is discharged in one hour, and for example, 0.025 C represents a current value of 1/40 thereof. The same applies hereinafter.

### [Evaluation of Cycle Capacity Retention Rate, Electrode Swelling, and Resistance after Cycles]

The nonaqueous electrolytic solution secondary battery after the above initial charging and discharging was subjected to constant-current discharging at 0.2 C up to 2.5 V in a 45°C thermostatic chamber. Thereafter, CC-CV charging was performed at 0.2 C to a voltage of 4.2 V, and then constant-current discharging was performed at 0.2 C up to 2.5 V, and the discharge capacity at this time was defined as the "initial capacity".

Thereafter, at 45°C, the battery was subjected to CC-CV charging at 1 C to a voltage of 4.2 V and then subjected to constant-current discharging at 1 C up to 2.5 V, and this cycle was repeated 200 times. Thereafter, CC-CV charging was performed at 0.2 C to a voltage of 4.2 V, and then constant-current discharging was performed at 0.2 C up to 2.5 V, and the discharge capacity at this time was defined as the "capacity after 200 cycles". The ratio of the initial capacity to the capacity after 200 cycles was defined as the "cycle capacity retention rate".

Thereafter, CC-CV charging was performed at 0.2 C to a voltage of 3.75 V, the thickness of the electrode portions of the sheet-shaped nonaqueous electrolytic solution secondary battery was measured, and the difference from the initial electrode thickness was defined as the "electrode swelling".

Further, the secondary battery was subjected to constant-current discharging at 0.15 C, 0.2 C, 0.75 C, and 1 C at 25°C, and the voltage at 10 seconds after the discharging was measured. The internal resistance was obtained from this current-voltage straight line and was defined as the "resistance after cycles".

Table 7 shows the cycle capacity retention rate, the electrode swelling, and the resistance after cycles (relative values when the lithium ion battery (Comparative Example III-1 or Comparative Example 111-3) in which the nonaqueous electrolytic solution does not comprise the compound (A) and other compounds in the lithium batteries using the respective negative electrodes is set to 100) of Examples and Comparative Examples.

**Table 7**

| | Compound (A) (% by mass) | Other compound (% by mass) | | Negative electrode | Cycle capacity retention rate (%) | Electrode swelling (%) | Resistance after cycles (%) |
|---|---|---|---|---|---|---|---|
| Example III-1 | 0.5 | - | - | 1 (graphite/Si) | 101.3 | 96 | 94 |
| Example III-2 | 0.5 | LiPO₂F₂ | 0.5 | 1 (graphite/Si) | 102.7 | 47 | 83 |
| Example III-3 | 0.5 | LiSO₃F | 0.5 | 1 (graphite/Si) | 103.0 | 89 | 82 |
| Comparative Example III-1 | - | - | - | 1 (graphite/Si) | 100.0 | 100 | 100 |
| Comparative Example III-2 | - | ES | 0.5 | 1 (graphite/Si) | 96.4 | 101 | 99 |
| Comparative Example III-3 | - | - | - | 2 (graphite) | 100.0 | 100 | 100 |
| Comparative Example III-4 | 0.5 | - | - | 2 (graphite) | 98.8 | 114 | 100 |

As is clear from Table 7, the nonaqueous electrolytic solution secondary battery (Example III-1) comprising the nonaqueous electrolytic solution comprising the compound (A) and the negative electrode 1 having the silicon-containing negative electrode active material exhibited an improved capacity retention rate after cycle charging and discharging, and suppressed electrode swelling and resistance after cycles, as compared with:
(a) the nonaqueous electrolytic solution secondary battery (Comparative Example III-1) comprising the nonaqueous electrolytic solution not comprising the compound (A) and the negative electrode 1, and
(b) the nonaqueous electrolytic solution secondary battery (Comparative Example 111-2) comprising the nonaqueous electrolytic solution comprising ES used in the prior art instead of the compound (A) and the negative electrode 1.

Further, it can be seen that the nonaqueous electrolytic solution secondary batteries (Examples 111-2 and III-3) comprising the nonaqueous electrolytic solution comprising the compound (A) and a specific amount of the specific additive and the negative electrode 1 having the silicon-containing negative electrode active material were improved in the capacity retention rate after the cycle charging and discharging, and suppressed in the electrode swelling at a higher level than the nonaqueous electrolytic solution secondary battery of Example III-1.

On the other hand, in the nonaqueous electrolytic solution secondary battery (Comparative Example III-4) comprising the nonaqueous electrolytic solution comprising the compound (A) and the negative electrode 2 comprising a silicon-free negative electrode active material, the capacity retention rate after cycle charging and discharging was worsened, the electrode swelling was increased, and no improvement was observed in the resistance after cycles, as compared with the nonaqueous electrolytic solution secondary battery (Comparative Example III-3) comprising the nonaqueous electrolytic solution not comprising the compound (A) and the negative electrode 2 comprising a silicon-free negative electrode active material. That is, in the nonaqueous electrolytic solution secondary battery comprising the negative electrode 2 comprising a silicon-free negative electrode active material, when the nonaqueous electrolytic solution comprising the compound (A) was used, the capacity retention rate after cycle charging and discharging was decreased rather than improved, the electrode swelling was worsened rather than suppressed, and no improvement was observed in the resistance after cycles. From this, it can be seen that, as shown in the Examples, the effects of being able to improve the capacity retention rate after cycle charging and discharging and to suppress the electrode swelling and the resistance after cycles are unique effects obtained when the nonaqueous electrolytic solution comprising the compound (A) is used in a nonaqueous electrolytic solution secondary battery comprising a negative electrode comprising a negative electrode active material comprising a metal element and/or a metalloid element capable of being alloyed with Li, such as silica.

In addition, from the results of the nonaqueous electrolytic solution secondary battery of Example 111-1 and the nonaqueous electrolytic solution secondary battery of Comparative Example III-4, it is considered that the effect of the present invention was obtained by forming a protective surface film by the reaction of the compound (A) containing a carbon-carbon unsaturated bond on the Si surfaces, further reducing the sulfur atoms to form an anionic surface film, thereby promoting Li conduction in the surface film to suppress excessive voltage during charging and discharging, and suppressing the deterioration of Si particles and the electrolytic solution decomposition reaction on the Si surfaces.

### Industrial Applicability

According to the nonaqueous electrolytic solution battery of the present invention, 1) the direct current resistance (DCR) retention rate after high-temperature storage can be improved and an increase in the gas generation amount after high-temperature storage can be suppressed, 2) the recovery capacity retention rate can be improved, 3) the capacity retention rate after cycle charging and discharging can be improved and electrode swelling and resistance can be suppressed, and 4) an increase in internal resistance can be suppressed. Therefore, the nonaqueous electrolytic solution battery of the present invention can be suitably used in all fields such as electronic devices in which nonaqueous electrolytic solution batteries have been conventionally used.

Further, the nonaqueous electrolytic solution battery of the present invention can be used for various known applications. Specific examples of the applications include a laptop computer, a pen input personal computer, a mobile personal computer, an electronic book player, a cellular phone, a portable fax machine, a portable copy machine, a portable printer, a portable audio player, a small video camera, a headphone stereo, a video movie, an liquid crystal television, a handy cleaner, a portable CD, a mini disc, a transceiver, an electronic notebook, a calculator, a memory card, a portable tape recorder, a radio, a backup power source, a motor, an automobile, a motorcycle, a motorized bicycle, a bicycle, a lighting device, a toy, a game machine, a watch, an electric tool, a strobe, a camera, a household backup power source, a backup power source for business offices, a power source for load leveling, and a renewable energy storage power source.

## Claims

1. A nonaqueous electrolytic solution comprising a compound (A) represented by formula (1): 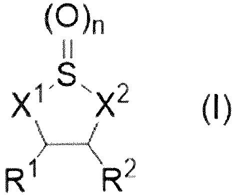 wherein X¹ and X² are each independently an oxygen atom or CH₂, R¹ and R² are each independently a hydrogen atom, a halogen atom, or a hydrocarbon group, and n is 1 or 2, provided that either one of R¹ and R² is a hydrocarbon group containing at least one carbon-carbon unsaturated bond, and when n is 2, at least one of X¹ and X² is CH₂.

2. The nonaqueous electrolytic solution according to claim 1, wherein the compound (A) is a compound represented by the following formula (II): 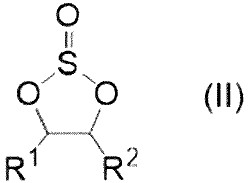 wherein R¹ and R² are the same as R¹ and R² in the formula (I).

3. The nonaqueous electrolytic solution according to claim 1 or 2, wherein R¹ and R² are each independently one selected from a hydrogen atom, a halogen atom, a vinyl group, and an allyl group, and either one of R¹ and R² is selected from a vinyl group and an allyl group.

4. The nonaqueous electrolytic solution according to any one of claims 1 to 3, further comprising 0.001% by mass or more and 5% by mass or less of one or more anion-containing compounds selected from the group consisting of a phosphate anion-containing compound having a P-F bond and a P=O bond, an anion-containing compound having a S=O bond, and an oxalate complex anion-containing compound, in the nonaqueous electrolytic solution.

5. The nonaqueous electrolytic solution according to any one of claims 1 to 4, wherein the nonaqueous electrolytic solution comprises 0.01% by mass or more and 10% by mass or less of the compound (A).

6. The nonaqueous electrolytic solution for a battery according to any one of claims 1 to 5, wherein the nonaqueous electrolytic solution further comprises one or more selected from the group consisting of a cyclic carbonate having a carbon-carbon unsaturated bond and a fluorine-atom-containing cyclic carbonate.

7. The nonaqueous electrolytic solution for a battery according to any one of claims 1 to 6, wherein the nonaqueous electrolytic solution further comprises a linear carboxylate.

8. A nonaqueous electrolytic solution battery comprising: a positive electrode having a positive electrode active material capable of absorbing and releasing a metal ion; a negative electrode having a negative electrode active material capable of absorbing and releasing a metal ion; and the nonaqueous electrolytic solution according to any one of claims 1 to 7.

9. The nonaqueous electrolytic solution battery according to claim 8, wherein the positive electrode comprises a lithium transition metal-based compound (B) represented by the following composition formula (5) as a positive electrode active material:
Li_{1+y2}MO₂ (5)
wherein y2 is -0.1 or more and 0.5 or less, M is a transition metal element comprising at least Ni, and a molar ratio (Ni/M) of a content of Ni to a content of all elements comprised in M is 0.40 or more and 1.0 or less.

10. The nonaqueous electrolytic solution battery according to claim 8 or 9, wherein the negative electrode active material comprises a material comprising a metal element and/or a metalloid element capable of being alloyed with Li.
